(19)

**Europäisches Patentamt**

**European Patent Office**

**Office européen des brevets**

(11) **EP 4 332 618 A1**

(12) **EUROPEAN PATENT APPLICATION**

(43) Date of publication:
**06.03.2024 Bulletin 2024/10**

(21) Application number: **23191894.7**

(22) Date of filing: **17.08.2023**

(51) International Patent Classification (IPC):
**G01S 7/481** [(2006.01)]

(52) Cooperative Patent Classification (CPC):
**G01S 7/4817; G01S 7/4813**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2022 CN 202211063312**
**13.03.2023 CN 202310283277**

(71) Applicant: **Suteng Innovation Technology Co., Ltd Shenzhen City Guangdong 518000 (CN)**

(72) Inventors:
- LEI, Youxue
  **Shenzhen City (CN)**
- ZHOU, Yue
  **Shenzhen City (CN)**

(74) Representative: **Ran, Handong et al Maucher Jenkins Seventh Floor Offices Artillery House 11-19 Artillery Row London SW1P 1RT (GB)**

(54) **LIDAR AND MANUFACTURING METHOD OF THE SAME**

(57) Embodiments of this application disclose LiDAR and a manufacturing method of the same, where the LiDAR includes a main body and a vibration damping structure, the main body includes a fixing base, and an optical system and a scanning system mounted on the fixing base, the vibration damping structure includes multiple vibration damping units, each vibration damping unit is connected to the fixing base, each vibration damping unit is configured to mount the fixing base onto a to-be-mounted member, and an elastic center of the vibration damping structure overlaps with a barycenter of the main body. In the embodiments of this application, both the optical system and the scanning system are mounted onto the same rigid fixing base, so that when the LiDAR is excited, the optical system and the scanning system can vibrate synchronously, to reduce relative displacement and rotation angles of the optical system and the scanning system.

FIG. 5

## Description

## TECHNICAL FIELD

This application relates to the field of laser ranging technologies, and in particular, to LiDAR, a manufacturing method of the same, and a mobile device or vehicle.

## BACKGROUND

A LiDAR refers to a device that emits an emission light signal to a target in external space and then receives an echo light signal from the target to obtain information such as a distance between the opto-mechanical system and the target after an analysis and a comparison of the emission light signal and the echo light signal. The opto-mechanical system is widely applied by virtue of its data characteristics such as instantaneity, stability and sufficiency.

In a related art, the LiDAR includes both an optical system and a scanning system. The scanning system is used to enlarge a detection angle of view of the LiDAR. However, in the related art, a drive motor of a scanning system vibrates when the scanning system is used, and the drive motor also vibrates when excited by external vibration, which is likely to cause an NVH (Noise, Vibration, and Harshness) problem and affect detection performance of the LiDAR.

## SUMMARY

Embodiments of this application provide a LiDAR and a manufacturing method of the same, to resolve a problem that an NVH problem is likely to occur and detection performance of the LiDAR is affected because a drive motor of a scanning system vibrates when the scanning system is used, and the drive motor also vibrates when excited by external vibration in a related art.

According to a first aspect, an embodiment of this application provides a LiDAR, including:

a main body, including an optical system, a scanning system and a fixing base, where the optical system includes a light emission assembly and a light receiving assembly, the light emission assembly is configured to emit an emission light signal, the scanning system is on a light emission path of the emission light signal and is configured to transmit the emission light signal to an object, the scanning system is further on a transmission path of an echo light signal returned by the object and is configured to transmit the echo light signal to the light receiving assembly, and both the optical system and the scanning system are mounted on the fixing base; and
a vibration damping structure, including multiple elastic vibration damping units, where each vibration damping unit is connected to the fixing base, and is configured to mount the fixing base onto a to-be-mounted member to mount the main body onto the to-be-mounted member, and an elastic center of the vibration damping structure overlaps with a barycenter of the main body.

According to a second aspect, an embodiment of this application provides a manufacturing method of a LiDAR, including:

providing a main body, where the main body includes an optical system, a scanning system and a fixing base, the optical system includes a light emission assembly and a light receiving assembly, the light emission assembly is configured to emit an emission light signal, the scanning system is on a light emission path of the emission light signal and is configured to transmit the emission light signal to an object, the scanning system is also on a transmission path of an echo light signal returned by the object and is configured to transmit the echo light signal to the light receiving assembly, and both the optical system and the scanning system are mounted on the fixing base;
providing a vibration damping structure, where the vibration damping structure includes multiple elastic vibration damping units; and
connecting each vibration damping unit to the fixing base, so that an elastic center of the vibration damping structure overlaps with a barycenter of the main body.

Based on the LiDAR and the manufacturing method of a LiDAR in this application, the optical system and the scanning system are mounted onto the fixing base, and the fixing base is mounted onto the to-be-mounted member through a vibration damping structure. That is, both the optical system and the scanning system are mounted onto the same rigid fixing base, so that when the LiDAR is excited by ambience, the optical system and the scanning system can vibrate synchronously, to reduce relative displacement and rotation angles of the optical system and the scanning system, thereby resolving the NVH problem caused by the vibration and improving the detection performance of the LiDAR and imaging quality and accuracy of a point cloud. In addition, in this embodiment of this application, the elastic center of the vibration damping structure overlaps with the barycenter of the main body, so that vibration of the main body in six degree-of-freedom directions can be decoupled, and the relative displacement and rotation angles of the optical system and the scanning system can be further reduced, thereby resolving the NVH problem caused by the vibration.

Embodiments of this application provide a LiDAR and a mobile device or vehicle, to resolve a problem that an NVH problem is likely to occur because the drive motor of the scanning system vibrates when the scanning system is used, and the drive motor also vibrates when excited by external vibration in a related art.

According to a third aspect, an embodiment of this application provides a LiDAR, including:

a housing module;

a core module, where the core module includes an optical system, a scanning system and a fixing base, the optical system includes a light emission assembly and a light receiving assembly, the light emission assembly is configured to emit detection light to a target object in a target region, the light receiving assembly is configured to receive echo light returned after the detection light is reflected by the target object, the scanning system is located downstream of the light emission assembly along a transmission direction of the detection light, the scanning system is located upstream of the light receiving assembly along a transmission direction of the echo light, and both the optical system and the scanning system are mounted onto the fixing base;

a first vibration damping structure, where the first vibration damping structure is connected to the housing module and the fixing base, and an elastic center of the first vibration damping structure overlaps with a barycenter of the core module; and

a second vibration damping structure, where the second vibration damping structure is connected to the housing module, the second vibration damping structure is configured to be connected to a to-be-mounted member to mount the LiDAR onto the to-be-mounted member, and an elastic center of the second vibration damping structure overlaps with a barycenter of the housing module.

In an embodiment, wherein a side of at least one vibration damping end plate that faces away from the first vibration damping ring presses against the other one of the fixing base and the housing module.

In an embodiment, wherein the first vibration damping unit further comprises:

a first rigid member, wherein the first rigid member is located in the first vibration damping ring, and a first locking member is connected to the first rigid member, wherein the first rigid member and the first vibration damping ring form an integrated structure, or the first rigid member and the other one of the fixing base and the housing module form an integrated structure.

In an embodiment, wherein the housing module comprises: a housing, wherein the first vibration damping structure is connected to the housing; and a translucent sheet, wherein the translucent sheet is connected to the housing, the translucent sheet is located downstream of the scanning system along the transmission direction of the detection light, and the translucent sheet is located upstream of the scanning system along the transmission direction of the echo light.

In an embodiment, wherein the second vibration damping structure comprises multiple second vibration damping units, and each second vibration damping unit comprises: a second vibration damper, wherein the second vibration damper is connected to one of the housing module and the to-be-mounted member; and a second locking member, wherein the second locking member is connected to the second vibration damper and the other one of the housing module and the to-be-mounted member, wherein the second vibration damper is configured to press against the other one of the housing module and the to-be-mounted member, or the second vibration damper is spaced apart from the other one of the housing and the to-be-mounted member.

In an embodiment, wherein the second vibration damping structure and the housing module form an integrated structure, or the second vibration damping structure is detachably connected to the housing module.

According to a fourth aspect, an embodiment of this application provides a mobile device or vehicle, including the foregoing LiDAR and a to-be-mounted member.

Based on the LiDAR and the mobile device or vehicle in this application, the optical system and the scanning system are mounted onto the fixing base, and in this way, if the drive motor of the scanning system vibrates when the scanning system operates or the core module is excited by external vibration, because both the optical system and the scanning system are mounted onto the same rigid fixing base, the optical system and the scanning system can vibrate synchronously, to reduce relative displacement and rotation angles of the optical system and the scanning system, thereby resolving the NVH problem caused by the vibration and further improving the detection performance of the LiDAR and imaging quality and accuracy of the point cloud. The first vibration damping structure and the second vibration damping structure are designed, so that dual-level vibration damping of the core module can be implemented. Compared with a single-level vibration damping solution with only the first vibration damping structure or the second vibration damping structure, for the dual-level vibration damping, vibration generated when the scanning system works can be attenuated twice and then transmitted to the to-be-mounted member, and vibration shock on the to-be-mounted member is transmitted to the core module after two attenuations, thereby improving vibration isolation performance of the LiDAR and alleviating noise. The elastic center of the first vibration damping structure overlaps with the barycenter of the core module, so that vibration of the core module in six degree-of-freedom directions can be decoupled, and the relative displacement and rotation angles of the optical system and the scanning system can be further reduced, thereby resolving the NVH problem caused by the vibration. The elastic center of the second vibration damping structure overlaps with the barycenter of the housing module, so that vibration of the housing module in six degree-of-freedom directions can be decoupled, and the relative displacement and rotation angles of the optical system and the scanning system can be further reduced, thereby resolving the NVH problem caused by the vibration.

## BRIEF DESCRIPTION OF THE DRAWINGS

To explain embodiments of the present application or the technical solutions in the prior art more clearly, the following briefly introduces the drawings that need to be used in the embodiments or the prior art. Obviously, the drawings in the following description are only some embodiments of the present application. The person skilled in the art may obtain other drawings based on these drawings without inventive labor.

FIG. 1 is a schematic structural diagram of a cross section of LiDAR in a plane perpendicular to a horizontal direction according to Embodiment 1 of this application;
FIG. 2 is a schematic structural diagram of a main body in LiDAR according to Embodiment 2 of this application;
FIG. 3 is a schematic structural diagram of a cross section of LiDAR in a plane parallel to a horizontal direction according to Embodiment 3 of this application;
FIG. 4 is a schematic structural diagram of a cross section of LiDAR in a plane perpendicular to a horizontal direction according to Embodiment 4 of this application;
FIG. 5 is a schematic three-dimensional structural diagram of a main body and a vibration damping structure in LiDAR according to Embodiment 5 of this application;
FIG. 6 is a schematic structural top view of LiDAR according to Embodiment 6 of this application;
FIG. 7 is a schematic structural diagram of a cross section of the LiDAR in FIG. 6 in a plane that passes through a barycenter of a main body and that is perpendicular to a horizontal direction;
FIG. 8 is a schematic diagram of a curve of transmissibility β changing along with a frequency ratio λ under different damping ratios ξ;
FIG. 9 is a schematic structural diagram of a connection between a vibration damping unit, a main body and a locking member in LiDAR according to Embodiment 7 of this application;
FIG. 10 is a schematic structural diagram of a connection between a vibration damping unit, a main body, a locking member and a housing in LiDAR according to Embodiment 8 of this application;
FIG. 11 is a schematic diagram of a transmissibility curve of LiDAR in a certain degree-of-freedom direction according to an embodiment of this application;
FIG. 12 is a schematic diagram of a curve of input displacement excitation and a displacement response of a main body of LiDAR in a certain degree-of-freedom direction according to an embodiment of this application;
FIG. 13 is a flowchart of a manufacturing method of LiDAR according to an embodiment of this application;
FIG. 14 is a schematic structural diagram of a mobile device or vehicle according to an embodiment of this application;
FIG. 15 is a schematic diagram of a part structure of LiDAR according to an embodiment of this application;
FIG. 16 is a schematic structural exploded view of the LiDAR in FIG. 15;
FIG. 17 is a schematic structural diagram of a partial cross section of the LiDAR in FIG. 15;
FIG. 18 is a schematic structural diagram of a cross section of a housing module in LiDAR in a plane that passes through a barycenter of the housing module and that is perpendicular to a horizontal direction according to an embodiment of this application;
FIG. 19 is a schematic structural diagram of a core module and a first vibration damping structure in LiDAR according to an embodiment of this application;
FIG. 20 is a schematic structural diagram of a connection between a core module, a first vibration damping structure and a housing module in LiDAR according to an embodiment of this application;
FIG. 21 is another schematic structural diagram of a connection between a core module, a first vibration damping structure and a housing module in LiDAR according to an embodiment of this application;
FIG. 22 is a schematic structural diagram of a connection between a housing module, a second vibration damping structure and a to-be-mounted member in LiDAR according to an embodiment of this application;
FIG. 23 is another schematic structural diagram of a connection between a housing module, a second vibration damping structure and a to-be-mounted member in LiDAR according to an embodiment of this application;
FIG. 24 is a schematic structural top view of a housing module in LiDAR according to an embodiment of this application; and
FIG. 25 is a schematic diagram of a transmissibility curve of LiDAR provided with a dual-level vibration damping structure of a first vibration damping structure and a second vibration damping structure in this embodiment of this application, and LiDAR provided with only a single-level vibration damping structure in a certain degree-of-freedom direction.

Reference signs: 100 - LiDAR; 110 - main body; 111 - optical system; 1111 - light emission assembly; 1112 - light receiving assembly; 112 - scanning system; 1121 - galvanometer; 1122 - rotating mirror; 113 - fixing base; 1131 - first mounting hole; 114 - first side wall; 115 - second side wall; 120 - vibration damping structure; 121 - vibration damping unit; 1211 - first vibration damping unit; 1212 - second vibration damping unit; 1213 - third vibration damping unit; 1214 - fourth vibration damping unit; 1215 - vibration damper; 1216 - vibration damping ring; 1217 - vibration damping end plate; 1218 - mounting plate; 1219 - locking member; 1210 - second mounting hole; 130 - housing; 140 - locking member; 150 - bulge; a - support center; b - elastic center; c - barycenter; and d - geometric center; and

10 - mobile device or vehicle; 1132 - first mounting plate; 1140 - extinction structure; 1150 - spatial light path structure; 1200 - first vibration damping structure; 1210 - first vibration damping unit; 12110 - first vibration damper; 12120 - first locking member; 12130 - first vibration damping ring; 12140 - first vibration damping end plate; 12150 - first mounting section; 12160 - first rigid member; 1300 - second vibration damping structure; 131 - second vibration damping unit; 131e - second vibration damping unit; 131f - second vibration damping unit; 131g - second vibration damping unit; 131h - second vibration damping unit; 1311 - second vibration damper; 1312 - second locking member; 1313 - second vibration damping ring; 1314 - second vibration damping end plate; 1315 - second mounting section; 1316 - second rigid member; 1400 - housing module; 141 - housing; 1411 - first bulge; 1412 - second mounting hole; 1413 - first side wall; 1414 - second side wall; 1415 - second mounting plate; 142 - translucent sheet; 200 - to-be-mounted member; 210 - second bulge; a - support center; b - elastic center; c - barycenter; x - support center; y - elastic center; z - barycenter; and d - geometric center of gravity.

## DESCRIPTION OF THE INVENTION

To make objectives, technical solutions and advantages of the present application clearer, embodiments of the present application are described in further detail below with reference to the drawings.

When the following description refers to the drawings, unless otherwise indicated, the same numbers in different drawings indicate the same or similar elements. The implementation described in the following exemplary embodiments do not represent all implementations consistent with the present application. On the contrary, the implementation is merely examples of devices and methods consistent with some aspects of the present application as detailed in the appended claims.

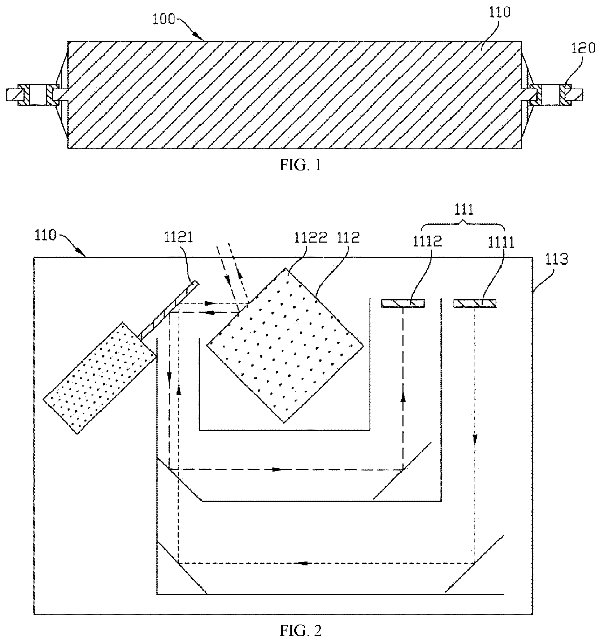

Referring to FIG. 1, an embodiment of this application provides LiDAR 100. The LiDAR 100 includes a main body 110 and a vibration damping structure 120 connected to the main body 110, so that the main body 110 can be mounted and fixed on a to-be-mounted member through the vibration damping structure 120, which facilitates attenuation of transmission of vibration generated by the main body 110 to the to-be-mounted member, and attenuation of transmission of vibration shock of the to-be-mounted member to the main body 110.

Specifically, referring to FIG. 2, the main body 110 includes an optical system 111, a scanning system 112 and a fixing base 113, where the optical system 111 includes a light emission assembly 1111 and a light receiving assembly 1112, the light emission assembly 1111 is configured to emit an emission light signal to an object, and the light receiving assembly 1112 is configured to receive an echo light signal returned by the object. The scanning system 112 is located on a light emission path of the emission light signal, and is configured to direct, in multiple directions, the emission light signal emitted by the light emission assembly 1111. The scanning system 112 is also located on a transmission path of the echo light signal, and is configured to receive echo light signals in multiple directions, to improve a detection angle of view of the LiDAR 100.

In this embodiment of this application, the optical system 111 and the scanning system 112 are mounted onto the fixing base 113, and the fixing base 113 is mounted onto the to-be-mounted member through a vibration damping structure 120. That is, both the optical system 111 and the scanning system 112 are mounted onto the same rigid fixing base 113, so that when the LiDAR 100 is excited by ambience, the optical system 111 and the scanning system 112 can vibrate synchronously, to reduce relative displacement and rotation angles of the optical system 111 and the scanning system 112, thereby resolving the NVH problem caused by the vibration and further improving the detection performance of the LiDAR 100 and imaging quality and accuracy of a point cloud.

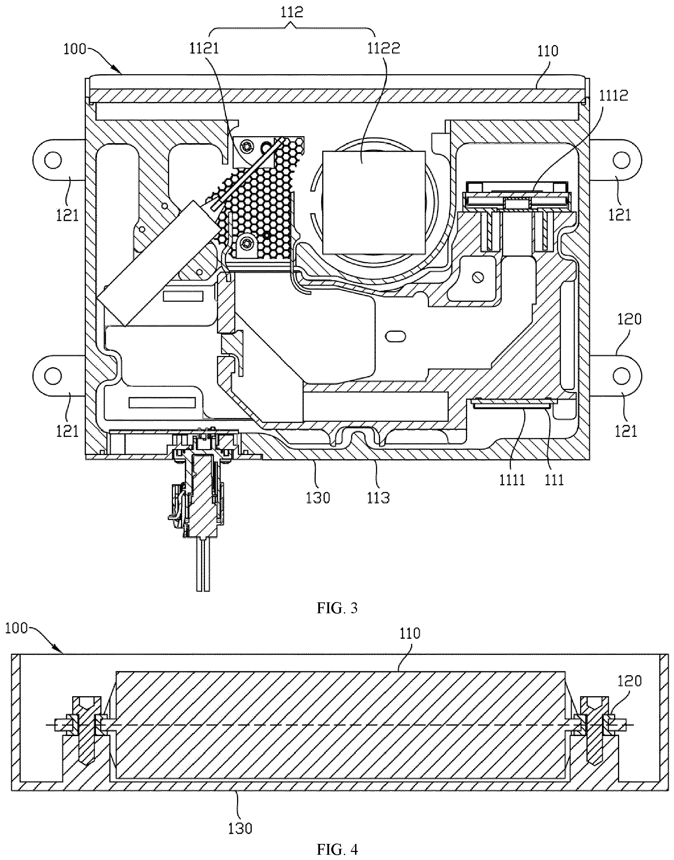

It can be understood that, referring to FIG. 3, the LiDAR 100 further includes a housing 130, and the optical system 111, the scanning system 112 and the like can be located in the housing 130.

In an exemplary solution, the fixing base 113 can form the housing 130 of the LiDAR 100, and the vibration damping structure 120 is located outside the housing 130. In addition, the to-be-mounted member can be equipment such as a vehicle, and the vibration damping structure 120 is configured to mount the main body 110 onto the vehicle. It should be noted that, in this exemplary solution, the main body 110 may be equivalent to the LiDAR in the related art. In addition to the optical system 111, the scanning system 112 and the housing 130, the main body 110 may also include a device such as a circuit board mounted in the housing 130. That is, a difference between the LiDAR 100 in this exemplary solution and the LiDAR in the related art is that a vibration damping structure 120 is additionally disposed outside the housing 130, and the main body can be mounted onto the to-be-mounted member such as the vehicle through the vibration damping structure 120.

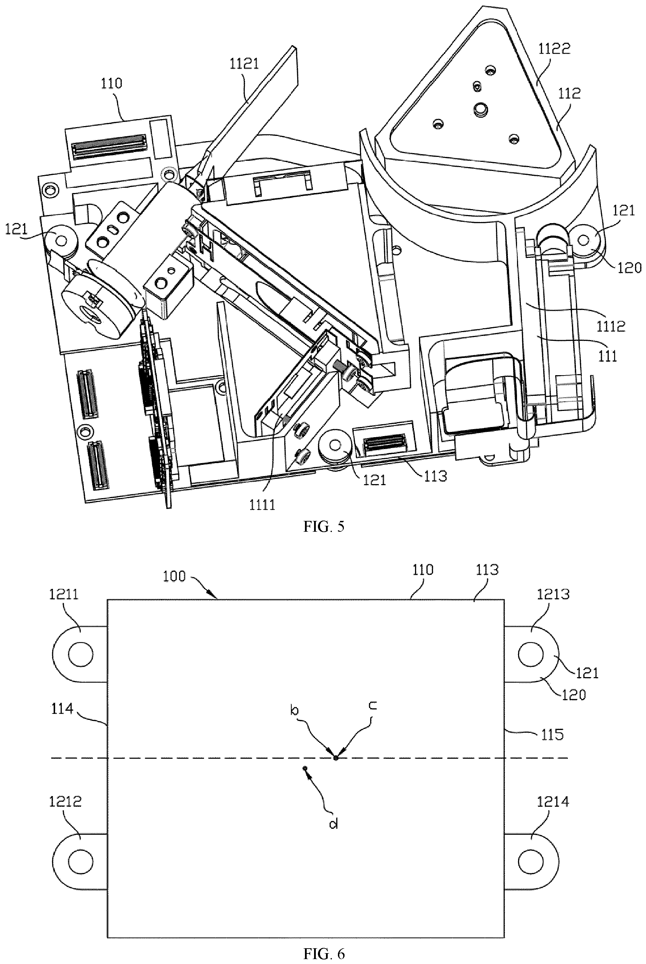

In another exemplary solution, referring to FIG. 4, the main body 110 can be located in the housing 130, and the vibration damping structure 120 can also be located in the housing 130. In this case, the to-be-mounted member can be the housing 130, and the vibration damping structure 120 is configured to mount the main body 110 onto the housing 130. It should be noted that, in this exemplary solution, in addition to the optical system 111, the scanning system 112 and the fixing base 113, the main body 110 further includes a device such as a circuit board mounted on the fixing base 113 if the device such as the circuit board is also mounted on the fixing base 113. This is not limited in this embodiment of this application. Optionally, in this exemplary solution, referring to FIG. 5, the fixing base 113 can be plate-shaped, and the optical system 111 and the scanning system 112 can be mounted on the same side of the fixed base 113. The fixing base 113 can also be housing-shaped, and the optical system 111, the scanning system 112 and the like can be mounted inside the fixing base 113.

Optionally, the light emission assembly 1111 in the optical system 111 includes a light emitter, an emission board, and an emission lens. The light emitter is configured to emit an emission light signal. The light emitter is mounted on the emission board. The emission lens is located on a transmission path of the emission light signal emitted by the light emitter, and the emission board and the emission lens are both mounted on the fixing base 113. Optionally, the light receiving assembly 1112 in the optical system 111 includes a light receiver, a receiving board and a receiving lens, the light receiver is mounted on the receiving board, the receiving lens is located on a transmission path of an echo light signal, and is configured to transmit the echo light signal to the light receiver, and the receiving board and the receiving lens are both mounted on the fixing base 113. Optionally, the scanning system 112 includes a galvanometer 1121 and/or a rotating mirror 1122, and when the scanning system 112 includes the galvanometer 1121, the galvanometer 1121 is mounted on the fixing base 113; when the scanning system 112 includes a rotating mirror 1122, the rotating mirror 1122 is mounted on the fixing base 113; or when the scanning system 112 includes the galvanometer 1121 and the rotating mirror 1122, both the galvanometer 1121 and the rotating mirror 1122 are mounted on the fixing base 113.

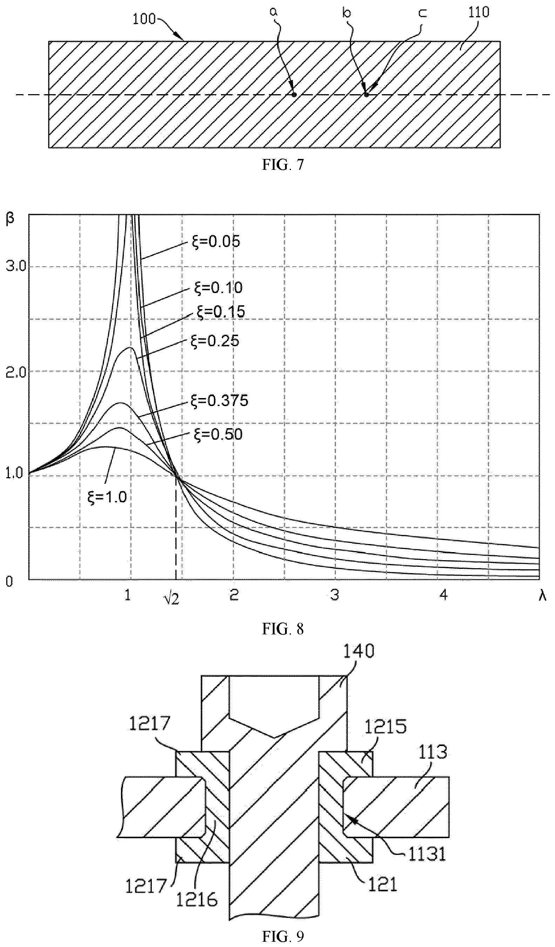

Referring to FIG. 6 and FIG. 7, the vibration damping structure 120 includes multiple elastic vibration damping units 121, each vibration damping unit 121 is connected to the fixing base 113, and each vibration damping unit 121 is configured to mount the fixing base 113 onto the to-be-mounted member, to further mount the main body 110 onto the to-be-mounted member. The elastic center b of the vibration damping structure 120 overlaps with the barycenter c of the main body 110.

The barycenter c of the main body 110 refers to a center of mass of the main body 110, which is an imaginary point where the mass of the main body 110 is concentrated. The elastic center b of the vibration damping structure 120 depends on rigidity and a geometric arrangement position of the vibration damping structure 120. In theory, if the elastic center b of the vibration damping structure 120 overlaps with the barycenter c of the main body 110, vibration of the main body 110 in six degree-of-freedom directions can be decoupled, and relative displacement and rotation angles of the optical system 111 and the scanning system 112 can be further reduced, thereby resolving the NVH problem caused by the vibration. Decoupling of vibration of the main body 110 in the six degree-of-freedom directions means that free vibration of the main body 110 in any one degree-of-freedom direction is independent of free vibration in another degree-of-freedom direction.

The elastic center b of the vibration damping structure 120 overlaps with the barycenter c of the main body 110, so that a support center a of the vibration damping structure 120 and the barycenter c of the main body 110 can also be located in the same horizontal plane, thereby optimally designing an arrangement position of each vibration damping unit 121 in the vibration damping structure 120.

It should be noted that a simulation means can be used to determine whether the support center a of the vibration damper 1215 and the barycenter c of the main body 110 are located in the same horizontal plane, and determine whether the elastic center b of the vibration damping structure 120 overlaps with the barycenter c of the main body 110.

As revealed in studies, FIG. 8 is a schematic diagram of a curve of transmissibility $\beta$ changing along with a frequency ratio $\lambda$ under different damping ratios $\xi$ in a single degree-of-freedom direction, where the transmissibility $\beta$ is a ratio of a displacement response amplitude of the main body 110 to an input displacement excitation amplitude, and the frequency ratio $\lambda$ is a ratio of external excitation frequency to inherent frequency of the system. It can be seen from FIG. 8 that when $\lambda=1$, $\beta$ greatly exceeds 1, and resonance occurs. Therefore, when a product is designed, the inherent frequency of the system should be prevented from being equal to the external excitation frequency. However, when $\lambda > \sqrt{2}$, the transmissibility $\beta$ is less than 1, which can damp vibration; and the greater the value of $\lambda$ is, the smaller the transmissibility $\beta$ is and the better the vibration damping effect is. Therefore, a designed lower limit of the vibration damping structure 120 in this embodiment of this application can satisfy: a ratio $\lambda$ of the external excitation frequency to the inherent frequency of the system is greater than $\sqrt{2}$ in each degree-of-freedom direction. Certainly, the ratio $\lambda$ of the external excitation frequency to the inherent frequency of the system should not be excessively large. It can be seen from FIG. 8 that when $\lambda>3$, improvement of the vibration damping effect becomes slower. Therefore, a designed upper limit of the vibration damping structure 120 in this embodiment of this application can satisfy: the ratio $\lambda$ of the external excitation frequency to the inherent frequency of the system in each degree-of-freedom direction is less than or equal to 3. Specifically, the ratio $\lambda$ of the external excita-

tion frequency to the inherent frequency of the system in each degree of freedom may be $\sqrt{2}$, 1.5, 1.7, 2, 2.5, 3, or the like. This is not limited in this embodiment of this application.

It should be noted that ratios λ of the external excitation frequency to the inherent frequency of the system in degree-of-freedom directions can be equal, or partially equal, or completely unequal, which can be flexibly adjusted based on an actual situation during design.

Optionally, when the ratios λ of the external excitation frequency to the inherent frequency of the system in degree-of-freedom directions are completely unequal, a design can be made based on a mounting position of the LiDAR 100. For example, when the main body 110 is configured to be mounted on the to-be-mounted member along a first linear degree-of-freedom direction, the vibration damping structure 120 may satisfy: vibration damping performance along the first linear degree-of-freedom direction is better than vibration damping performance along another degree-of-freedom direction. Specifically, in a specific embodiment, the ratio of the external excitation frequency to the inherent frequency of the system in the first linear degree-of-freedom direction is λ1, while a ratio of the external excitation frequency to the inherent frequency of the system along another degree-of-freedom direction is λn, where λ1>λn, $\sqrt{2}$<λ1<3, and $\sqrt{2}$<λn<3.

It should be noted that during design, the damping ratio ξ of the vibration damping structure 120 can also be reasonably selected. It can be seen from FIG. 8 that when $\lambda > \sqrt{2}$, the greater the damping ratio ξ is, the greater the vibration transmissibility β is and the worse the vibration damping effect is. The smaller the damping ratio ξ is, the greater the vibration across the resonance region is. Therefore, the design of the damping ratio ξ of the vibration damping structure 120 can ensure both an amplification factor and a satisfactory vibration damping effect during resonance.

It should be noted that the vibration damping unit 121 can damp the vibration of the main body 110 in more than two degree-of-freedom directions in a first movement degree of freedom, a second movement degree of freedom, a third movement degree of freedom, a first rotation degree of freedom, a second rotation degree of freedom, and a third rotation degree of freedom. Any two of the first movement degree of freedom, the second movement degree of freedom, and the third movement degree of freedom are perpendicular to each other, the first rotation degree of freedom is arranged around the first movement degree-of-freedom direction, the second rotation degree of freedom is arranged around the second movement degree-of-freedom direction and the third rotation degree of freedom is arranged around the third movement degree-of-freedom direction. The first movement degree of freedom and the second movement degree of freedom may be degrees of freedom in the horizontal plane.

Referring to FIG. 9, each vibration damping unit 121 includes a vibration damper 1215, and the vibration damper 1215 includes a vibration damping ring 1216 and two vibration damping end plates 1217, and the vibration damping ring 1216 is connected to the fixing base 113 of the main body 110. The two vibration damping end plates 1217 are respectively located on two opposite sides of the vibration damping ring 1216 along an axial direction of the vibration damping ring 1216, each vibration damping end plate 1217 has a terminal connected to the vibration damping ring 1216, and another terminal extending in a direction that leaves the vibration damping ring 1216 and that is perpendicular to the axial direction of the vibration damping ring 1216, and a side of at least one vibration damping end plate 1217 that faces away from the vibration damping ring 1216 may be configured to press against the to-be-mounted member. The vibration damper 1215 can damp the vibration of the main body 110 along two degree-of-freedom directions, namely axial and radial directions of the vibration damping ring 1216, so that a structure is easy to design, which facilitates application of the LiDAR 100 to equipment such as the vehicle.

Specifically, when the housing 130 forms the fixing base 113 and the vehicle is used as the to-be-mounted member, a side of at least one vibration damping end plate 1217 that faces away from the vibration damping ring 1216 can be configured to press against the vehicle. In addition, when the main body 110 is located in the housing 130 and the housing 130 is used as the to-be-mounted member, a side of at least one vibration damping end plate 1217 that faces away from the vibration damping ring 1216 can be configured to press against the housing 130.

In an exemplary solution, referring to FIG. 9, the vibration damper 1215 may be directly connected to the fixing base 113. For example, the fixing base 113 is provided with a first mounting hole 1131, the vibration damping ring 1216 is located in the first mounting hole 1131 and the two vibration damping end plates 1217 are respectively located on two opposite sides of the first mounting hole 1131. The vibration damping ring 1216 can be connected in an interference fit with the first mounting hole 1131.

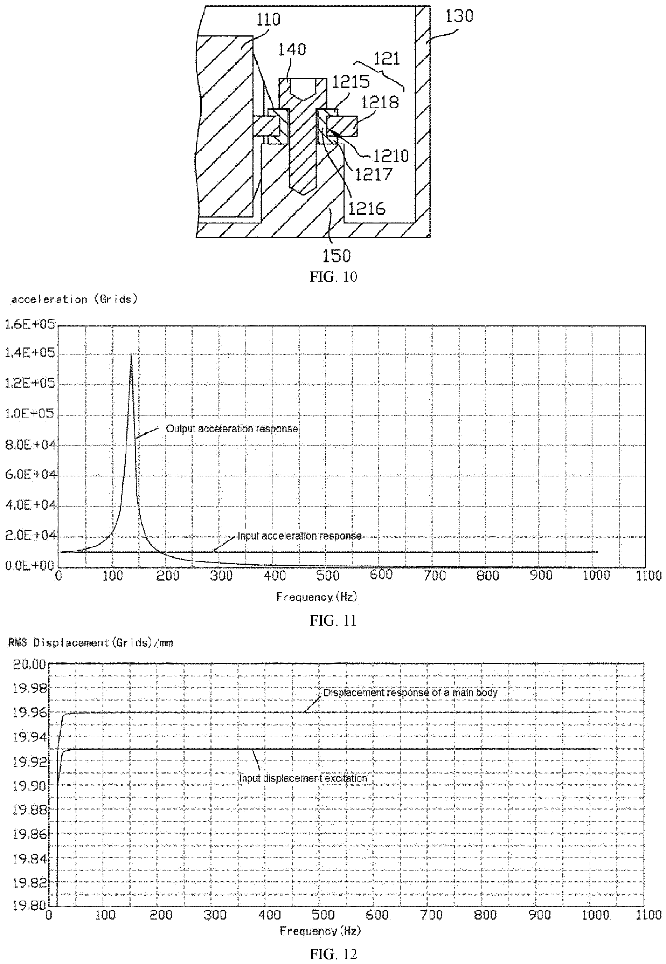

In another exemplary solution, referring to FIG. 10, each vibration damping unit 121 further includes a mounting plate 1218, and the vibration damper 1215 is connected to the fixing base 113 through the mounting plate 1218. For example, a second mounting hole 1210 is formed on the mounting plate 1218, the vibration damping ring 1216 is located in the second mounting hole 1210 and the two vibration damping end plates 1217 are respectively located on two opposite sides of the second mounting hole 1210. The vibration damping ring 1216 can be connected in an interference fit with the second mounting hole 1210.

Optionally, the vibration damper 1215 can be made of any elastic material. For example, the vibration damper 1215 can be made of rubber and other materials, thereby implementing low manufacturing costs. Optionally, when the vibration damping unit 121 includes the vibration damper 1215 and the mounting plate 1218, the vibration damper 1215 and the mounting plate 1218 in at least one vibration damping unit 121 may form an integrated structure. Optionally, the vibration damper 1215 can be made of an elastic material such as rubber, and the mounting plate 1218 can be made of a rigid material such as metal. The vibration damper 1215 and the mounting plate 1218 can form the integral structure through processes such as bi-color injection molding and integral compression molding.

Optionally, as shown in FIG. 9 and FIG. 10, the LiDAR 100 further includes a locking member 140, where the number of locking members is equal to the number of vibration damping units 121, and locking members 140 are configured to connect the vibration damping units 121 to to-be-mounted members one to one. Optionally, when the vibration damping unit 121 includes the vibration damper 1215, the locking member 140 may pass through the vibration damping ring 1216 and be configured to connect and fix the vibration damping unit 121 to the to-be-mounted member. The locking member 140 may include a screw or the like, an end cap of the screw may abut against a side of the vibration damper 1215 that faces away from the to-be-mounted member, and a rod of the screw may be threadedly connected to the to-be-mounted member.

Optionally, because the support center a of the vibration damping structure 120 and the barycenter c of the main body 110 are located in the same horizontal plane, and the vibration damping structure 120 is lighter and thinner than the main body 110, to facilitate a connection between the vibration damping structure 120 and the to-be-mounted member, a bulge 150 can also be designed between each vibration damping unit 121 of the vibration damping structure 120 and the to-be-mounted member, and the bulge 150 is fixed on the to-be-mounted member. Specifically, when the main body 110 is located in the housing 130 and the housing 130 is used as the to-be-mounted member, the bulge 150 may be located in the housing 130 and connected to the housing 130. However, when the housing 130 forms the fixing base 113 and the vehicle is used as the to-be-mounted member, the bulge 150 can be located outside the housing 130 and connected to the vehicle.

The vibration damping structure 120 can include any number of vibration damping units 121; and optionally, the number of vibration damping units 121 included in the vibration damping structure 120 is more than three. For example, the number of vibration damping units 121 included in the vibration damping structure 120 can be three, four, five, or the like. When the external excitation frequency is great, if the number of vibration damping units 121 is great and the to-be-mounted member deforms, some vibration damping units 121 may be dislocated, the main body 110 or the vibration damping unit 121 is consequently damaged due to excessive force, and therefore, the number of vibration damping units 121 included in the vibration damping structure 120 is preferably three or four. The three vibration damping units 121 and the main body 110 have good compliance, and because three points determine a plane, the three vibration damping units are less likely to be affected by deformation of the to-be-mounted member, the inherent frequency of the system is low, and an effect of resisting torsional vibration is good. Four vibration damping units 121 implement good stability and can overcome large torque counterforce. Therefore, during actual manufacturing, the three vibration damping units 121 or four vibration damping units 121 can be selected based on a specific situation.

The vibration damping structure 120 is described in detail below by taking the vibration damping structure 120 including four vibration damping units 121 as an example:

Referring to FIG. 6 again, a peripheral side wall of the main body 110 includes multiple side walls that are perpendicular to the horizontal plane and that are connected in sequence. Specifically, the peripheral side wall includes a first side wall 114 and a second side wall 115 that are opposite and parallel to each other, and the four vibration damping units 121 of the vibration damping structure 120 can be respectively denoted as a first vibration damping unit 12101, a second vibration damping unit 1212, a third vibration damping unit 1213 and a fourth vibration damping unit 1214. The first vibration damping unit 12101 and the second vibration damping unit 1212 are both connected to the first side wall 114 of the main body 110, and the third vibration damping unit 1213 and the fourth vibration damping unit 1214 are both connected to the second side wall 115 of the main body 110. The first vibration damping unit 12101 and the second vibration damping unit 1212 are symmetrical with respect to a first plane, the third vibration damping unit 1213 and the fourth vibration damping unit 1214 are symmetrical with respect to the first plane, the first vibration damping unit 12101 and the third vibration damping unit 1213 are symmetrical with respect to a second plane, and the second vibration damping unit 1212 and the fourth vibration damping unit 1214 are symmetrical with respect to the second plane. The first plane is a vertical plane that passes through the barycenter c of the main body 110 and that is perpendicular to the first side wall 114, and the second plane is a vertical plane that passes through a geometric center d of the main body 110 and that is parallel to the first side wall 114. The arrangement positions of the four vibration damping units 121 and the main body 110 are properly designed, which lowers difficulty in subsequently designing decoupling in each degree-of-freedom direction.

Optionally, support centers of the first vibration damping unit 12101, the second vibration damping unit 1212, the third vibration damping unit 1213, and the fourth vibration damping unit 1214 are located in the same horizontal plane as the barycenter c of the main body 110, so that a support center a of the vibration damping structure 120 and the barycenter c of the main body 110 are located in the same horizontal plane.

Optionally, the peripheral side wall of the main body 110 includes four side walls, and each two adjacent side walls are perpendicular to each other. It should be noted that the barycenter c of the main body 110 may or may not overlap with the geometric center d of the main body 110.

Optionally, along the same degree-of-freedom direction, a ratio of rigidity of the first vibration damping unit 12101 to rigidity of the third vibration damping unit 1213 is a first ratio, a ratio of rigidity of the second vibration damping unit 1212 to rigidity of the fourth vibration damping unit 1214 is a second ratio, and the first ratio is equal to the second ratio. For example, along the first linear degree-of-freedom direction, rigidity of the first vibration damping unit 12101 is p1, and rigidity of the third vibration damping unit 1213 is p3; along the first linear degree-of-freedom direction, rigidity of the second vibration damping unit 1212 is p2, and rigidity of the fourth vibration damping unit 1214 is p4; and therefore, along the first linear degree-of-freedom direction, a ratio p1/p3 of the rigidity p1 of the first vibration damping unit 12101 to the rigidity p3 of the third vibration damping unit 1213 is equal to a ratio p2/p4 of the rigidity p2 of the second vibration damping unit 1212 to the rigidity p4 of the fourth vibration damping unit 1214. For another example, along the second linear degree-of-freedom direction, rigidity of the first vibration damping unit 12101 is q1, and rigidity of the third vibration damping unit 1213 is q3; along the second linear degree-of-freedom direction, rigidity of the second vibration damping unit 1212 is q2, and rigidity of the fourth vibration damping unit 1214 is q4; and therefore, along the second linear degree-of-freedom direction, a ratio q1/q3 of the rigidity q1 of the first vibration damping unit 12101 to the rigidity q3 of the third vibration damping unit 1213 is equal to a ratio q2/q4 of the rigidity q2 of the second vibration damping unit 1212 to the rigidity q4 of the fourth vibration damping unit 1214.

Optionally, along the same degree-of-freedom direction, the rigidity of the first vibration damping unit 12101 is equal to the rigidity of the second vibration damping unit 1212, and the rigidity of the third vibration damping unit 1213 is equal to the rigidity of the fourth vibration damping unit 1214, so that vibration of the main body 110 in six degree-of-freedom directions is decoupled. For example, along the first linear degree-of-freedom direction, the rigidity p1 of the first vibration damping unit 12101 is equal to the rigidity p3 of the third vibration damping unit 1213, and the rigidity p2 of the second vibration damping unit 1212 is equal to the rigidity p4 of the fourth vibration damping unit 1214. For another example, along the second linear degree-of-freedom direction, the rigidity q1 of the first vibration damping unit 12101 is equal to the rigidity q3 of the third vibration damping unit 1213, and the rigidity q2 of the second vibration damping unit 1212 is equal to the rigidity q4 of the fourth vibration damping unit 1214.

Rigidity of the vibration damping unit 121 affects the inherent frequency of the system; and along each degree-of-freedom direction, the rigidity of the first vibration damping unit 12101 is designed to be equal to the rigidity of the second vibration damping unit 1212, and the rigidity of the third vibration damping unit 1213 is designed to be equal to the rigidity of the fourth vibration damping unit 1214, which lowers difficulty in designing the vibration damping structure 120 and reduces design costs.

Optionally, the vibration damping units 121 in the vibration damping structure 120 may be approximately the same. For example, the vibration damping units 121 in the vibration damping structure 120 may use the same structure, manufacturing material, and the like.

The LiDAR 100 in this embodiment of this application damps vibration of the main body 110 including the optical system 111 and the scanning system 112, without affecting internal parameters of optical devices due to introduction of the vibration damping process. In addition, an arrangement position and rigidity of each vibration damping unit 121 are designed based on a barycenter position, a mass and an inertia parameter of the main body 110 subject to vibration isolation, which can ensure that excitation generated by an internal movable component of the LiDAR 100 is better attenuated and excessive relative displacement is not caused due to the introduction of the vibration damping structure 120.

Referring to FIG. 11 and FIG. 12, FIG. 11 is a schematic diagram of a transmissibility curve of LiDAR 100 in a certain degree-of-freedom direction according to an embodiment of this application. Referring to FIG. 11, it can be seen that the inherent frequency of the system is approximately 133 Hz and a more significant attenuation effect on external input excitation above 200 Hz can be implemented. FIG. 12 is a schematic diagram of a curve of input displacement excitation and a displacement response of a main body 110 of LiDAR 100 in a certain degree-of-freedom direction. Referring to FIG. 12, it can be seen that the relative displacement between the displacement response of the main body 110 and the input displacement excitation of the LiDAR 100 in this embodiment of this application is kept at about 0.3 mm, which has little impact on an external parameter of the LiDAR 100.

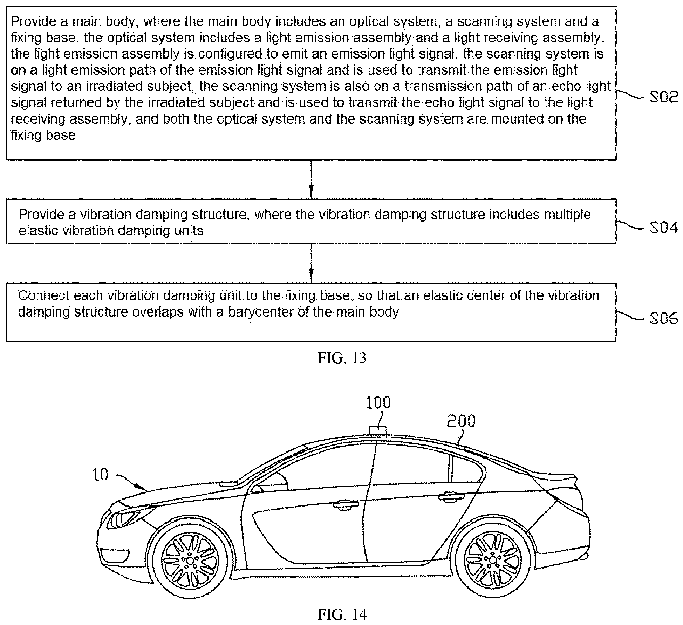

Referring to FIG. 13, an embodiment of this application also provides a manufacturing method of LiDAR 100, where the LiDAR 100 may be the foregoing LiDAR 100. Details are not described herein again. The manufacturing method of LiDAR 100 includes the following steps:

Step S02: Provide a main body 110, where the main body 110 includes an optical system 111, a scanning system 112 and a fixing base 113, the optical system 111 includes a light emission assembly 1111 and a light receiving assembly 1112, the light emission assembly 1111 is configured to emit an emission light signal, the scanning system 112 is on a light emission path of the emission light signal and is used to transmit the emission light signal to an object, the scanning system 112 is also on a transmission path of an echo light signal returned by the object and is used to transmit the echo light signal to the light receiving assembly 1112, and both the optical system 111 and the scanning system 112 are mounted on the fixing base 113.

Step S04: Provide a vibration damping structure 120, where the vibration damping structure 120 includes multiple elastic vibration damping units 121.

Step S06: Connect each vibration damping unit 121 to the fixing base 113, so that an elastic center b of the vibration damping structure 120 overlaps with a barycenter c of the main body 110.

An execution sequence of step S02 and step S04 may be that step S02 is executed first and then step S04 is executed, or step S04 is executed first and then step S02 is executed, or step S02 and step S04 are executed synchronously.

Referring to FIG. 14, an embodiment of this application provides LiDAR 100. When being used, the LiDAR 100 is first mounted and fixed. For example, the LiDAR 100 is mounted on a to-be-mounted member 200. The to-be-mounted member 200 can be a vehicle body or the like. A specific type of the to-be-mounted member 200 can be correspondingly adjusted based on a specific use need of the LiDAR 100. This is not limited.

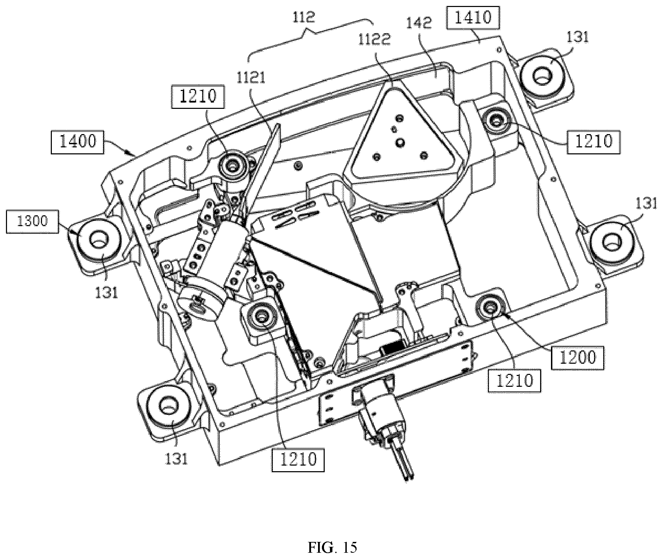

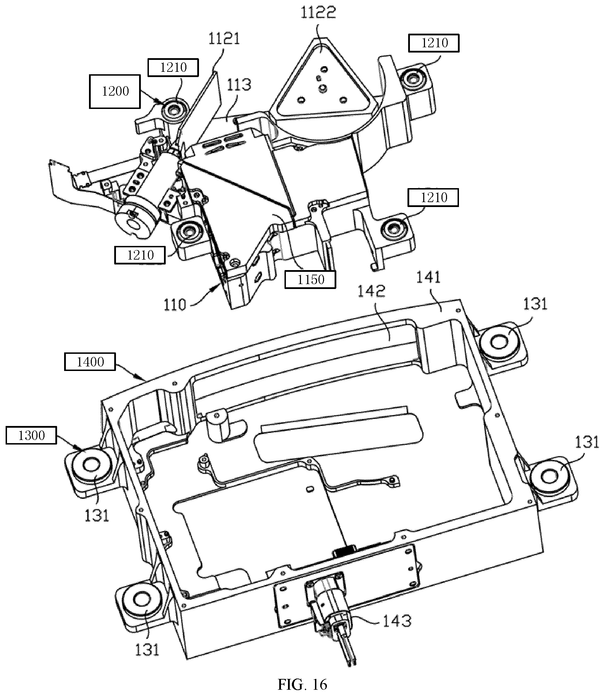

Referring to FIG. 15, FIG. 16 and FIG. 17, the LiDAR 100 includes a core module 110, a first vibration damping structure 1200, a second vibration damping structure 1300 and a housing module 1400.

The core module 110 includes an optical system 111, a scanning system 112 and a fixing base 113, the optical system 111 includes a light emission assembly 1111 and a light receiving assembly 1112, the light emission assembly 1111 is configured to emit detection light to a target object in a target region, the light receiving assembly 1112 is configured to receive echo light returned after the detection light is reflected by the target object, the scanning system 112 is located downstream of the light emission assembly 1111 along a transmission direction of the detection light and is configured to emit, in multiple directions, the detection light emitted by the light emission assembly 1111, and the scanning system 112 is located upstream of the light receiving assembly 1112 along a transmission direction of the echo light, so that the light receiving assembly 1112 receives echo light in multiple directions, thereby enlarging a detection angle of view of the LiDAR 100.

The optical system 111 and the scanning system 112 are mounted onto the fixing base 113, and in this way, if the drive motor of the scanning system 112 vibrates when the scanning system 112 operates or the core module 110 is excited by external vibration, because both the optical system 111 and the scanning system 112 are mounted onto the same rigid fixing base 113, the optical system 111 and the scanning system 112 can vibrate synchronously, to reduce relative displacement and rotation angles of the optical system 111 and the scanning system 112, thereby resolving the NVH problem caused by the vibration and further improving the detection performance of the LiDAR 100 and imaging quality and accuracy of the point cloud.

Further, the light emission assembly 1111 in the optical system 111 may include a light emitter, an emission board, and an emission lens. The light emitter is configured to emit detection light. The light emitter is mounted on the emission board. The emission lens is located on a transmission path of the detection light emitted by the light emitter, and the emission board and the emission lens are both mounted on the fixing base 113. The light receiving assembly 1112 in the optical system 111 may include a light receiver, a receiving board and a receiving lens, the light receiver is mounted on the receiving board, the receiving lens is located on a transmission path of echo light, and is configured to transmit the echo light to the light receiver, and the receiving board and the receiving lens are both mounted on the fixing base 113.

The scanning system 112 may scan vertically and/or horizontally. The scanning system 112 may be any device capable of changing a propagation path of light, for example, a galvanometer, a reflector, a projection prism, and a rotating mirror. This is not limited. In this embodiment of this application, the scanning system 112 includes a galvanometer 1121 and a rotating mirror 1122. The galvanometer 1121 and the rotating mirror 1122 are both mounted onto the fixing base 113.

It should be noted that, in addition to the optical system 111, the scanning system 112 and the fixing base 113, the core module 110 further includes a first structure member mounted on the fixing base 113 if the first structure member is also mounted on the fixing base 113. The first structure member may be an extinction structure 1140, a spatial light path structure 1150, or the like. This is not limited. It can be understood that all the devices included in the core module 110 are mounted on the same rigid fixing base 113, and therefore, if the drive motor of the scanning system 112 vibrates when the scanning system 112 works or the core module 110 is excited by ambience, all the devices included in the core module 110 can roughly maintain synchronous vibration.

The extinction structure 1140 may include one or more of a first extinction device disposed at an emission terminal of the light emitter, a second extinction device disposed at a receiving terminal of the light receiver, and a third extinction device disposed between an emission lens and the scanning system 112 and a fourth extinction device disposed between the receiving lens and the scanning system 112. A first light path and a second light path are formed on the spatial light path structure 1150. The first light path can be configured to transmit detection light, and the second light path can be configured to transmit echo light. The first light path and the second light path can be independent of each other, and the first light path and the second light path can also share at least a part.

The fixing base 113 can be plate-shaped, and the optical system 111 and the scanning system 112 can be mounted on the same side of the fixed base 113. The fixing base 113 can also be housing-shaped, and the optical system 111, the scanning system 112 and the like can be mounted inside the fixing base 113.

The housing module 1400 includes a housing 141 and a translucent sheet 142 connected to the housing 141, the translucent sheet 142 is located downstream of the scanning system 112 along the transmission direction of the detection light, and the translucent sheet 142 is located upstream of the scanning system 112 along the transmission direction of the echo light. The translucent sheet 142 is made of a translucent material, which can allow the detection light and echo light to pass through; and the housing 141 is made of a non-translucent material, which can avoid blocking light.

In an exemplary solution, the housing 141 and the translucent sheet 142 may form an integral structure. For example, the housing 141 and the translucent sheet 142 may form the integral structure via a process such as bi-color injection molding.

In another exemplary solution, the housing 141 and the translucent sheet 142 may be molded independently and connected into an integral structure via an adhesive or the like. In this exemplary solution, a window is formed in the housing 141, and the translucent sheet 142 is disposed at the window and connected to the housing 141 via the adhesive or the like.

It should be noted that, in addition to the housing 141 and the translucent sheet 142, the housing module 1400 also includes a second structure member mounted on the housing 141 if the second structure member is also mounted on the housing 141, where the second structure member can be a main control board, a power board, or the like. This is not limited. It can be understood that all the devices included in the housing module 1400 are mounted on the same rigid housing 141, and therefore, if the housing module 1400 is excited by ambience or vibration of the drive motor of the scanning system 112 when the scanning system 112 works, all the devices included in the housing module 1400 can roughly maintain synchronous vibration.

It should be noted that if electrical signal interaction is required between the core module 110 and the housing module 1400, the core module 110 and the housing module 1400 can be electrically connected via a flexible printed circuit, where the flexible printed circuit can deform to release stress generated when the core module 100 vibrates and/or the housing module 140 vibrates, and attenuate vibration transmission between the core module 110 and the housing module 1400. For example, if the housing module 1400 includes a main control board, the main control board and the emission board of the core module 110 can be electrically connected through the flexible printed circuit, and the main control board and the receiving board of the core module 110 can be electrically connected through the flexible printed circuit.

Further, the core module 110 is connected to the housing module 1400 through the first vibration damping structure 1200, which facilitates attenuation of transmission of vibration shock generated by the core module 110 to the housing module 1400, and attenuation of transmission of vibration shock of the housing module 1400 to the core module 110. Specifically, the fixing base 113 of the core module 110 is connected to the housing 141 of the housing module 140 via the first vibration damping structure 1200.

Further, referring to FIG. 7, the elastic center b of the first vibration damping structure 1200 approximately overlaps with the barycenter c of the core module 110. The barycenter c of the core module 110 refers to a center of mass of the core module 110, which is an imaginary point where the mass of the core module 110 is concentrated. The elastic center b of the first vibration damping structure 1200 depends on rigidity and a geometric arrangement position of the first vibration damping structure 1200. In theory, if the elastic center b of the first vibration damping structure 1200 approximately overlaps with the barycenter c of the core module 110, vibration of the core module 110 in six degree-of-freedom directions can be decoupled, and relative displacement and rotation angles of the optical system 111 and the scanning system 112 can be further reduced, thereby resolving the NVH problem caused by the vibration. Decoupling of vibration of the core module 110 in the six degree-of-freedom directions means that free vibration of the core module 110 in any one degree-of-freedom direction is independent of free vibration in another degree-of-freedom direction.

Six degrees of freedom may include a first movement degree of freedom, a second movement degree of freedom, a third movement degree of freedom, a first rotation degree of freedom, a second rotation degree of freedom, and a third rotation degree of freedom. Any two of the first movement degree of freedom, the second movement degree of freedom, and the third movement degree of freedom are perpendicular to each other, the first rotation degree of freedom is arranged around the first movement degree-of-freedom direction, the second rotation degree of freedom is arranged around the second movement degree-of-freedom direction and the third rotation degree of freedom is arranged around the third movement degree-of-freedom direction. The first movement degree of freedom and the second movement degree of freedom may be degrees of freedom in the horizontal plane.

The elastic center b of the first vibration damping structure 1200 approximately overlaps with the barycenter c of the core module 110, so that a support center a of the first vibration damping structure 1200 and the barycenter c of the core module 110 can also be approximately located in the same horizontal plane, thereby optimally designing an arrangement position of each first vibration damping unit 1210 in the first vibration damping structure 1200.

It should be noted that a simulation means can be used to determine whether the elastic center b of the first vibration damping structure 1200 overlaps with the barycenter c of the core module 110, and determine whether the support center a of the first vibration damping structure 1200 and the barycenter c of the core module 110 are located in the same horizontal plane.

Further, the housing module 140 is connected to the to-be-mounted member 200 through the second vibration damping structure 1300, which facilitates attenuation of transmission of vibration shock generated by the LiDAR 100 to the to-be-mounted member 200, and attenuation of transmission of vibration shock of the to-be-mounted member 200 to the LiDAR 100. Specifically, the housing 141 of the housing module 140 is connected to the to-be-mounted member 200 via the second vibration damping structure 1300.

In this embodiment of this application, the first vibration damping structure 1200 and the second vibration damping structure 1300 are combined, so that dual-level vibration damping of the core module 110 can be implemented. Compared with a single-level vibration damping solution with only the first vibration damping structure or the second vibration damping structure, for the dual-level vibration damping, vibration generated when the scanning system 112 works can be attenuated twice and then transmitted to the to-be-mounted member 200, and vibration shock on the to-be-mounted member 200 is transmitted to the core module 110 after two attenuations, thereby improving vibration isolation performance of the LiDAR 100 and alleviating noise.

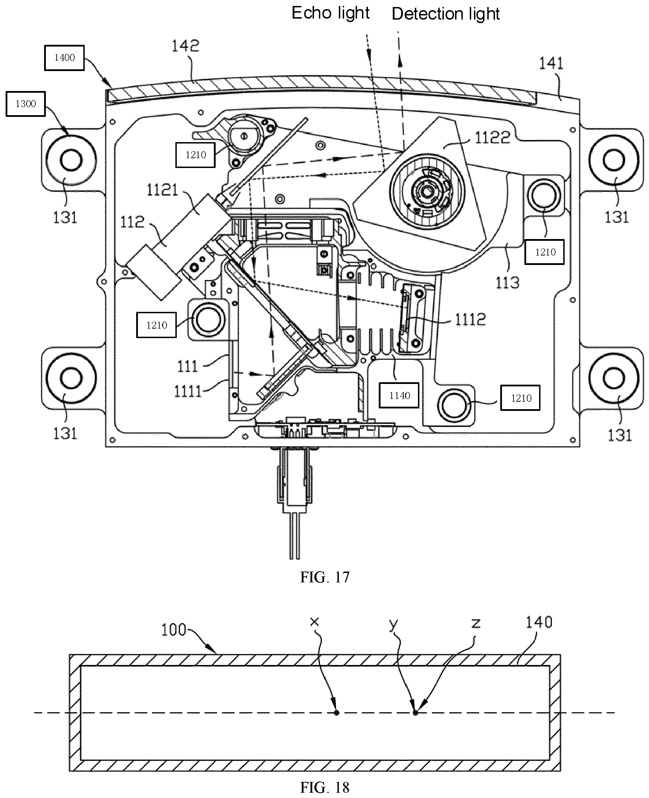

Further, referring to FIG. 18, the elastic center y of the second vibration damping structure 1300 approximately overlaps with the barycenter z of the housing module 140. The barycenter z of the housing module 140 is a center of mass of the housing module 140, the elastic center y of the second vibration damping structure 1300 depends on rigidity and a geometric distribution position of the second vibration damping structure 1300. In theory, if the elastic center y of the second vibration damping structure 1300 approximately overlaps with the barycenter z of the housing module 140, vibration of the housing module 140 in six degree-of-freedom directions can be decoupled, vibration transmitted from the housing module 140 to the core module 110 in six degree-of-freedom directions is decoupled, and relative displacement and rotation angles of the optical system 111 and the scanning system 112 can be further reduced, thereby resolving the NVH problem caused by the vibration. Decoupling of vibration of the housing module 140 in the six degree-of-freedom directions means that free vibration of the housing module 140 in any one degree-of-freedom direction is independent of free vibration in another degree-of-freedom direction.

The elastic center y of the second vibration damping structure 1300 approximately overlaps with the barycenter z of the housing module 140, so that a support center x of the second vibration damping structure 1300 and the barycenter z of the housing module 140 can also be approximately located in the same horizontal plane, thereby optimally designing an arrangement position of each second vibration damping unit 131 in the second vibration damping structure 1300.

It should be noted that a simulation means can be used to determine whether the elastic center y of the second vibration damping structure 1300 overlaps with the barycenter z of the housing module 140, and determine whether the support center x of the second vibration damping structure 1300 and the barycenter z of the housing module 140 are located in the same horizontal plane.

Further, the elastic center b of the first vibration damping structure 1200 and the elastic center y of the second vibration damping structure 1300 are on the first line. It can be understood that, as an optional method, a first straight line is approximately perpendicular to a mounting surface of the to-be-mounted member 200 on which the LiDAR 100 is mounted, so that the vibration of the core module 110 can be in a decoupled state when the vibration of the housing module 140 is transmitted to the core module 110 from at least one degree of freedom parallel to a first straight line direction, or the vibration of the housing module 140 can be in a decoupled state when the vibration of the core module 110 is transmitted to the housing module 140 from at least one degree of freedom parallel to the first straight line direction. In this way, vibration damping performance of the first vibration damping structure 1200 and/or the second vibration damping structure 1300 in a direction parallel to the first straight line direction can be designed based on vibration excitation in a direction parallel to the first straight line direction, thereby reducing design difficulty of the first vibration damping structure 1200 and/or the second vibration damping structure 1300, and improving a vibration damping effect of the first vibration damping structure 1200 and the second vibration damping structure 1300.

It should be noted that the mounting surface of the to-be-mounted member 200 configured to mount the LiDAR 100 may be a horizontal plane, an inclined plane forming an included angle with the horizontal plane, a curved plane, or the like, and may be flexibly adjusted based on an actual need, which is not limited. If the mounting surface is the horizontal plane, then the first straight line is approximately a vertical line; if the mounting surface is the inclined plane, the first straight line is approximately an inclined line forming an included angle with the vertical line; or if the mounting surface is the curved plane, when the first straight line is perpendicular to the mounting surface in this case, it may be indicated that the first straight line is approximately perpendicular to a plane determined via more than one connection point at which the LiDAR 100 and the to-be-mounted member 200 are connected. For example, there are three connection points between the LiDAR 100 and the to-be-mounted member 200, the three connection points may be approximately located in the same plane, and the first straight line may be approximately perpendicular to the plane.

Further, the elastic center b of the first vibration damping structure 1200 overlaps with the elastic center y of the second vibration damping structure 1300, the elastic center b of the first vibration damping structure 1200 approximately overlaps with the barycenter c of the core module 110, the elastic center y of the second vibration damping structure 1300 approximately overlaps with the barycenter z of the housing module 140, and therefore, the barycenter c of the core module 110 can approximately overlap with the barycenter z of the housing module 140, so that the vibration on the core module 110 can be in the decoupled state when the vibration of the housing module 140 decoupled in the six degree-of-freedom directions is transmitted to the core module 110, or the vibration on the housing module 140 can be in the decoupled state when the vibration of the core module 110 decoupled in the six degree-of-freedom directions is transmitted to the housing module 140. In this way, transmission of vibration in each degree-of-freedom direction between the to-be-mounted member 200 and the housing module 140 and between the housing module 140 and the core module 110 can be independent of rotation transmission in another degree-of-freedom direction, so that the vibration transmission is controllable, thereby improving the vibration damping effect of the LiDAR 100.

As revealed in studies, FIG. 8 is a schematic diagram of a curve of transmissibility $\beta$ changing along with a frequency ratio $\lambda$ under different damping ratios $\xi$ in a single degree-of-freedom direction, where the transmissibility $\beta$ is a ratio of a displacement response amplitude of the system to an input displacement excitation amplitude, and the frequency ratio $\lambda$ is a ratio of excitation frequency to inherent frequency of the system. It can be seen from FIG. 8 that when $\lambda=1$, $\beta$ greatly exceeds 1, and resonance occurs. Therefore, when a product is designed, the inherent frequency of the system should be prevented from being equal to the excitation frequency. However, when $\lambda > \sqrt{2}$ , the transmissibility $\beta$ is less than 1, which can damp vibration; and the greater the value of $\lambda$ is, the smaller the transmissibility $\beta$ is and the better the vibration damping effect is. Therefore, a ratio $\lambda$ of the excitation frequency to the inherent frequency of the system can be selected as being greater than $\sqrt{2}$ in each degree-of-freedom direction. Certainly, the ratio $\lambda$ of the excitation frequency to the inherent frequency of the system should not be excessively large. It can be seen from FIG. 8 that when $\lambda>3$, improvement of the vibration damping effect becomes slower. Therefore, the ratio $\lambda$ of the excitation frequency to the inherent frequency of the system in each degree-of-freedom direction can be selected as being less than or equal to 3. That is, the ratio $\lambda$ of the excitation frequency to the inherent frequency of the system in each degree-of-freedom direction can be greater than $\sqrt{2}$ and less than or equal to 3.

Specifically, for the core module 110, the first vibration damping structure 1200 may satisfy: the ratio $\lambda 1$ of the excitation frequency of the core module 110 to the inherent frequency of the system of the core module 110 in each degree-of-freedom direction can be greater than $\sqrt{2}$ and less than or equal to 3. For example, the ratio $\lambda 1$ of the excitation frequency of the core module 110 to the inherent frequency of the system of the core module 110 in each degree-of-freedom direction can be $\sqrt{2}$ , 1.5, 1.7, 2, 2.5, 3, or the like, which is not limited.

Generally, the excitation frequency of the core module 110 in each degree-of-freedom direction can be obtained by evaluating experimental data. In order that the ratio $\lambda 1$ of the excitation frequency of the core module 110 to the inherent frequency of the system of the core module 110 in each degree-of-freedom direction is greater than $\sqrt{2}$ and less than or equal to 3, the inherent frequency of the system of the core module 110 can be changed. Further, the inherent frequency of the system of the core module 110 can be changed by changing the first vibration damping structure 1200. For example, the inherent frequency of the system of the core module 110 can be changed by changing rigidity, a structure, a geometric distribution, or the like of the first vibration damping structure 1200.

It should be noted that ratios $\lambda 1$ of the excitation frequency of the core module 110 to the inherent frequency of the system of the core module 110 in degree-of-freedom directions can be equal, or partially equal, or completely unequal, which can be flexibly adjusted based on an actual situation during design.

Optionally, when the ratios $\lambda 1$ of the excitation frequency of the core module 110 to the inherent frequency of the system of the core module 110 in degree-of-freedom directions are completely unequal, a design can be made based on mounting positions of the LiDAR 100 and the core module 110. For example, when the core module 110 is configured to be mounted on the housing module 140 along a first linear degree-of-freedom direction and the housing module 140 is mounted on the to-be-mounted member 200 along a first linear degree-of-freedom direction, the first vibration damping structure 1200 may satisfy: vibration damping performance along the first linear degree-of-freedom direction is better than vibration damping performance along another degree-of-freedom direction. Specifically, in a specific embodiment, the ratio of the excitation frequency of the core module 110 to the inherent frequency of the system of the core module 110 in the first linear degree-of-freedom direction is $\lambda 11$, while a ratio of the excitation frequency of the core module 110 to the inherent frequency of the system of the core module 110 along another degree-of-freedom direction is $\lambda 1n$, where $\lambda 11 > \lambda 1n$,

$$\sqrt{2} < \lambda 11 < 3 \text{ and } \sqrt{2} < \lambda 1n < 3 .$$

For example, when the core module 110 is configured to be mounted on the housing module 140 along a vertical direction and the housing module 140 is mounted on the to-be-mounted member 200 along the vertical direction, the first vibration damping structure 1200 may satisfy: vibration damping performance along the vertical direction is better than vibration damping performance along another degree-of-freedom direction.

Specifically, for the housing module 140, the second vibration damping structure 1300 may satisfy: the ratio $\lambda 2$ of the excitation frequency of the housing module 140 to the inherent frequency of the system of the housing module 140 in each degree-of-freedom direction can be greater than $\sqrt{2}$ and less than or equal to 3. For example, the ratio $\lambda 2$ of the excitation frequency of the housing module 140 to the inherent frequency of the system of the housing module 140 in each degree-of-freedom direction can be $\sqrt{2}$, 1.5, 1.7, 2, 2.5, 3, or the like, which is not limited.

Generally, the excitation frequency of the housing module 140 in each degree-of-freedom direction can be obtained by evaluating experimental data. In order that the ratio $\lambda 2$ of the excitation frequency of the housing module 140 to the inherent frequency of the system of the housing module 140 in each degree-of-freedom direction is greater than $\sqrt{2}$ and less than or equal to 3, the inherent frequency of the system of the housing module 140 can be changed. Further, the inherent frequency of the system of the housing module 140 can be changed by changing the second vibration damping structure 1300. For example, the inherent frequency of the system of the housing module 140 can be changed by changing rigidity, a structure, a geometric distribution, or the like of the second vibration damping structure 1300.

It should be noted that ratios $\lambda 2$ of the excitation frequency of the housing module 140 to the inherent frequency of the system of the housing module 140 in degree-of-freedom directions can be equal, or partially equal, or completely unequal, which can be flexibly adjusted based on an actual situation during design.

Optionally, when the ratios $\lambda 2$ of the excitation frequency of the housing module 140 to the inherent frequency of the system of the housing module 140 in degree-of-freedom directions are completely unequal, a design can be made based on a mounting position of the housing module 140. For example, when the housing module 140 is mounted on the to-be-mounted member 200 along a first linear degree-of-freedom direction, the second vibration damping structure 1300 may satisfy: vibration damping performance along the first linear degree-of-freedom direction is better than vibration damping performance along another degree-of-freedom direction. Specifically, in a specific embodiment, the ratio of the excitation frequency of the housing module 140 to the inherent frequency of the system of the housing module 140 in the first linear degree-of-freedom direction is $\lambda 21$, while a ratio of the excitation frequency of the housing module 140 to the inherent frequency of the system of the housing module 140 along another degree-of-freedom direction is $\lambda 2n$, where $\lambda 21 > \lambda 2n$, $\sqrt{2} < \lambda 21 < 3$, and $\sqrt{2} < \lambda 2n < 3$ .

It should be noted that during design, the damping ratio $\xi$ of the first vibration damping structure 1200 or the second vibration damping structure 1300 can also be reasonably selected. It can be seen from FIG. 8 that when $\lambda > \sqrt{2}$ , the greater the damping ratio $\xi$ is, the greater the vibration transmissibility $\beta$ is and the worse the vibration damping effect is. The smaller the damping ratio $\xi$ is, the greater the vibration across the resonance region is. Therefore, the design of the damping ratio $\xi$ of the first vibration damping structure 1200 or the second vibration damping structure 1300 can ensure both an amplification factor and a satisfactory vibration damping effect during resonance.

Next, the first vibration damping structure 1200 is described in detail.

The first vibration damping structure 1200 can damp the vibration of the core module 110 in at least one of the six degree-of-freedom directions.

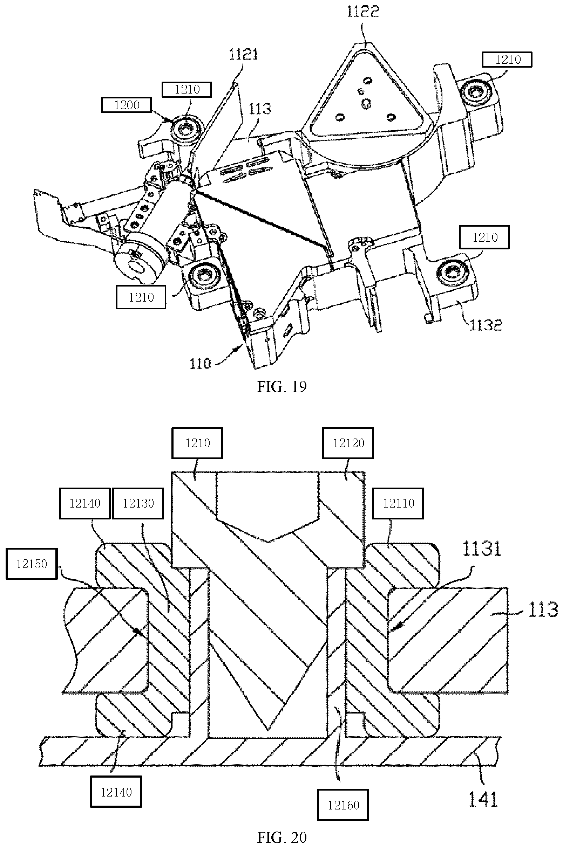

Specifically, referring to FIG. 19, the first vibration damping structure 1200 includes first vibration damping units 1210, and each first vibration damping unit 1210 is connected to the fixing base 113 of the core module 110 and the housing 141 of the housing module 140.

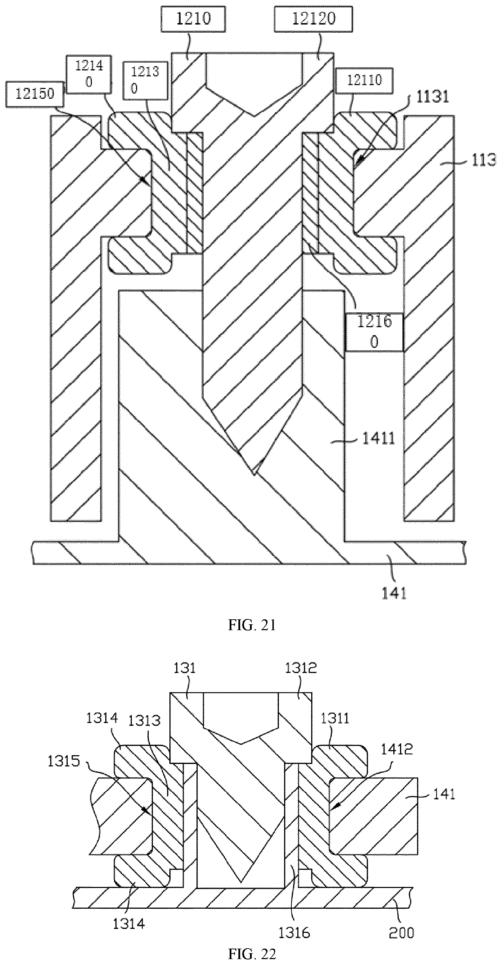

Referring to FIG. 20 and FIG. 21, each first vibration damping unit 1210 includes a first vibration damper 12110 and a first locking member 12120, the first vibration damper 12110 is connected to one of the fixing base 113 and the housing 141, and the first locking member 12120 is connected to the first vibration damper 12110 and the other one of the fixing base 113 and the housing 141. The first vibration damper 12110 can be elastic and can damp vibration. The first locking member 12120 is a rigid member and can connect the fixing base 113 to the housing 141.

Referring to FIG. 19, the first vibration damper 12110 not only is connectable to one of the fixing base 113 and the housing 141, but also can press against the other one of the fixing base 113 and the housing 141, so that there is a sufficient contact area between the first vibration damper 12110, the fixing base 113 and the housing 141, and the vibration damping effect is better. It should be noted that, to lower a dimensional design requirement of the first vibration damper 12110, referring to FIG. 20, the first vibration damper 12110 and the other one of the fixing base 113 and the housing 141 can also be arranged at intervals without any connection relationship.

Further, the first vibration damper 12110 includes a first vibration damping ring 12130 and two first vibration damping end plates 12140, the two first vibration damping end plates 12140 are respectively located on two opposite sides of the first vibration damping ring 12130 along an axial direction of the first vibration damping ring 12130, each first vibration damping end plate 12140 has a terminal connected to the first vibration damping ring 12130, and another terminal extending in a direction that leaves the first vibration damping ring 12130 and that is perpendicular to the axial direction of the first vibration damping ring 12130, and a first mounting section 12150 is defined between the two first vibration damping end plates 12140 and the first vibration damping ring 12130, and one of the fixing base 113 and the housing 141 is mounted in the first mounting section 12150. The first vibration damping ring 12130 and the two first vibration damping end plates 12140 are elastic and can damp vibration. Specifically, the first vibration damping ring 12130 and the two first vibration damping end plates 12140 can be made of an elastic material such as rubber, which is not limited.

The first vibration damper 12110 is designed to include a first mounting section 12150, one of the fixing base 113 and the housing 141 is mounted in the first mounting section 12150, and the first vibration damper 12110 can be connected to the fixing base 113 or the housing 141 through wrapping, without an additional auxiliary structure, thereby facilitating connection. In addition, when one of the fixing base 113 and the housing 141 is mounted in the first mounting section 12150, a contact surface between the fixing base 113 or the housing 141 and the first vibration damper 12110 can be increased, thereby improving a vibration damping effect of the first vibration damper 12110.

The first vibration damper 12110 can damp vibration of core member 110 along two degree-of-freedom directions, namely axial and radial directions of the first vibration damping ring 12130, so that a structure is easy to design, which facilitates application of the LiDAR 100 to equipment such as the vehicle.

If the first vibration damper 12110 is connected to one of the fixing base 113 and the housing 141, one of the fixing base 113 and the housing 141 may be provided with a mounting hole, at least part of the first vibration damper 12110 may be located in the mounting hole, and at least part of the first vibration damper 12110 may be connected in an interference fit with the mounting hole. For example, in this embodiment of this application, the first vibration damper 12110 is connected to the fixing base 113. Specifically, the fixing base 113 is provided with a first mounting hole 1131, the first vibration damping ring 12130 is located in the first mounting hole 1131 and the two first vibration damping end plates 12140 are respectively located on two opposite sides of the first mounting hole 1131. The first vibration damping ring 12130 can be connected in an interference fit with the first mounting hole 1131.

If the first vibration damper 12110 also presses against the other one of the fixing base 113 and the housing 141, it may be indicated that at least one first vibration damping end plate 12140 in the first vibration damper 12110 also presses against the other one of the fixing base 113 and the housing 141. For example, in this embodiment of this application, the first vibration damper 12110 is connected to the fixing base 113, and at least one first vibration damping end plate 12140 in the first vibration damper 12110 also presses against the housing 141.

Further, the first vibration damping unit 1210 further includes a first rigid member 12160, the first rigid member 12160 is located in the first vibration damping ring 12130, and the first locking member 12120 connects the first rigid member 12160 to the other one of the fixing base 113 and the housing 141. The first locking member 12120 is connected to the first rigid member 12160, and the first rigid member 12160 is made of a rigid material. Compared with an elastic member made of the elastic material, for example the first vibration damping ring 12130 or the first vibration damping end plate 12140 connected to the first locking member 12120, the first rigid member is not twisted and deformed during a connection process, is easier to connect and can have a restraint effect. In addition, the first locking member 12120 is connected to the first rigid member 12160, which can protect the elastic member such as the first vibration damping ring 12130 or the first vibration damping end plate 12140 in a process of connecting the first locking member 12120 to the first rigid member 12160, thereby avoiding damaging the first vibration damping ring 12130 or the first vibration damping end plate 12140 when the first locking member 12120 is connected to the elastic member such as the first vibration damping ring 12130 or the first vibration damping end plate 12140.

Referring to FIG. 20, the first rigid member 12160 and the other one of the fixing base 113 and the housing 141 can form an integral structure. In this embodiment of this application, the first vibration damper 12110 is connected to the fixing base 113, and the first rigid member 12160 and the housing 141 form an integral structure. Alternatively, referring to FIG. 21, the first rigid member 12160 and the first vibration damping ring 12130 can form an integral structure.

Further, the first rigid member 12160 may have a connection hole extending in an axial direction of the first vibration damping ring 12130, and the first locking member 12120 may be connected to the connection hole of the first rigid member 12160. In this way, the arrangement of the first rigid member 12160 also helps to ensure rigidity design accuracy of the first vibration damping unit 1210 in the axial direction of the first vibration damping ring 12130. The first locking member 12120 and the connection hole may be threadedly connected, which is not limited.

Specifically, the first locking member 12120 may include a screw or the like, an end cap of the screw may abut against a side of the first vibration damper 12110 that faces away from the housing 141, and a rod of the screw may be threadedly connected to the first rigid member 12160 and the housing 141.

In this embodiment of this application, the first vibration damping unit 1210 is connected to the fixing base 113. Referring to FIG. 20, the first vibration damping unit 1210 can be directly connected to the fixing base 113. Referring to FIG. 19, the first vibration damping unit 1210 and the fixing base 113 may also be connected indirectly. For example, the first vibration damping unit 1210 is connected to the fixing base 113 via a first mounting plate 1132 on the fixing base 113, which is not limited.

Further, the first mounting plate 1132 and the fixing base 113 can form an integral structure, and the first mounting plate 1132 and the first vibration damping unit 1210 can also form an integral structure, which is not limited. If the first mounting plate 1132 and the first vibration damping unit 1210 form an integral structure, the first mounting plate 1132 and the first vibration damping unit 1210 can form the integral structure through processes such as bi-color injection molding and integral compression molding.

Referring to FIG. 21, the housing 141 can also be provided with a first bulge 1411 at the first vibration damping unit 1210, and when the first locking member 12120 of the first vibration damping unit 1210 is connected to the housing 141, it may be indicated that the first locking member 12120 is connected to the first bulge 1411. On the one hand, arrangement of the first bulge 1411 facilitates mounting and positioning of the core module 110 in the housing 141, and on the other hand, compared with the direct connection between the first locking member 12120 and the housing 141, the first locking member 12120 is connected to the first bulge 1411, so that a distance between the two connected structures can be shortened and connection is more convenient.

The first vibration damping structure 1200 can include any number of first vibration damping units 1210; and optionally, the number of first vibration damping units 1210 included in the first vibration damping structure 1200 is more than three. For example, the number of first vibration damping units 1210 included in the first vibration damping structure 1200 can be three, four, five, or the like. When the excitation frequency is great, if the number of first vibration damping units 1210 is great and the housing 141 deforms, some first vibration damping units 1210 may be dislocated, the core module 110 or the first vibration damping unit 1210 is consequently damaged due to excessive force, and therefore, the number of first vibration damping units 1210 included in the first vibration damping structure 1200 is preferably three or four. The three first vibration damping units 1210 and the core module 110 have good compliance, and because three points determine a plane, the three vibration damping units are less likely to be affected by deformation of the housing 141, the inherent frequency of the system of the core module 110 can be low, and an effect of resisting torsional vibration is good. Four first vibration damping units 1210 implement good stability and can overcome large torque counterforce. Therefore, during actual manufacturing, the three first vibration damping units 1210 or four first vibration damping units 1210 can be selected based on a specific situation.

Next, the second vibration damping structure 1300 is described in detail.

The second vibration damping structure 1300 can damp the vibration of the housing module 140 in at least one of the six degree-of-freedom directions.

Specifically, the second vibration damping structure 1300 includes second vibration damping units 131, and each second vibration damping unit 131 is connected to the housing 141 of the housing module 140 and the to-be-mounted member 200.

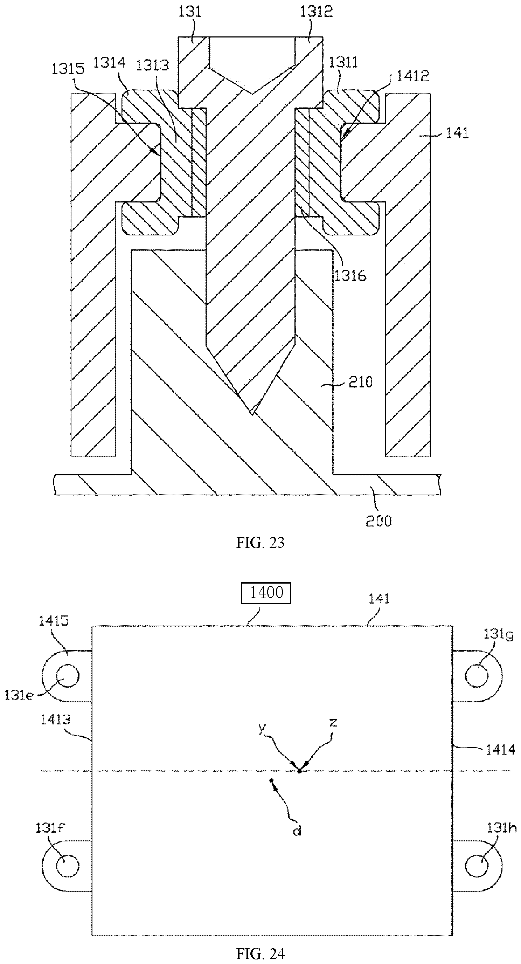

Referring to FIG. 22 and FIG. 23, each second vibration damping unit 131 includes a second vibration damper 1311 and a second locking member 1312, the second vibration damper 1311 is connected to one of the housing 141 and the to-be-mounted member 200, and the second locking member 1312 is connected to the second vibration damper 1311 and the other one of the housing 141 and the to-be-mounted member 200. The second vibration damper 1311 can be elastic and can damp vibration. The second locking member 1312 is a rigid member and can connect the housing 141 to the to-be-mounted member 200.

Referring to FIG. 11, not only the second vibration damper 1311 is connected to one of the housing 141 and the to-be-mounted member 200, but also the second vibration damper 1311 can press against the other one of the housing 141 and the to-be-mounted member 200, so that there is a sufficient contact area between the second vibration damper 1311, the housing 141 and the to-be-mounted member 200, and the vibration damping effect is better. It should be noted that, to lower a dimensional design requirement of the second vibration damper 1311, referring to FIG. 22, the second vibration damper 1311 and the other one of the housing 141 and the to-be-mounted member 200 can also be arranged at intervals without any connection relationship.

Further, the second vibration damper 1311 includes a second vibration damping ring 1313 and two second vibration damping end plates 1314, the two second vibration damping end plates 1314 are respectively located on two opposite sides of the second vibration damping ring 1313 along an axial direction of the second vibration damping ring 1313, each second vibration damping end plate 1314 has a terminal connected to the second vibration damping ring 1313, and another terminal extending in a direction that leaves the second vibration damping ring 1313 and that is perpendicular to the axial direction of the second vibration damping ring 1313, and a second mounting section 1315 is defined between the two second vibration damping end plates 1314 and the second vibration damping ring 1313, and one of the housing 141 and the to-be-mounted member 200 is mounted in the second mounting section 1315. The second vibration damping ring 1313 and the two second vibration damping end plates 1314 are elastic and can damp vibration. Specifically, the second vibration damping ring 1313 and the two second vibration damping end plates 1314 can be made of an elastic material such as rubber, which is not limited.

The second vibration damper 1311 is designed to include a second mounting section 1315, one of the housing 141 and the to-be-mounted member 200 is mounted in the second mounting section 1315, and the second vibration damper 1311 can be connected to the housing 141 or the to-be-mounted member 200 through wrapping, without an additional auxiliary structure, thereby facilitating connection. In addition, when one of the housing 141 and the to-be-mounted member 200 is mounted in the second mounting section 1315, a contact surface between the to-be-mounted member 200 or the to-be-mounted member 200 and the second vibration damper 1311 can be increased, thereby improving a vibration damping effect of the second vibration damper 1311.

The second vibration damper 1311 can damp vibration of a module of the to-be-mounted member 200 along two degree-of-freedom directions, namely axial and radial directions of the second vibration damping ring 1313, so that a structure is easy to design, which facilitates application of the LiDAR 100 to equipment such as the vehicle.

If the second vibration damper 1311 is connected to one of the housing 141 and the to-be-mounted member 200, one of the housing 141 and the to-be-mounted member 200 may be provided with a mounting hole, at least part of the second vibration damper 1311 may be located in the mounting hole, and at least part of the second vibration damper 1311 may be connected in an interference fit with the mounting hole. For example, in the embodiments of this application, the second vibration damper 1311 is connected to the housing module 141. Specifically, a second mounting hole 1412 is disposed on the housing 141, the second vibration damping ring 1313 is located in the second mounting hole 1412 and the two second vibration damping end plates 1314 are respectively located on two opposite sides of the second mounting hole 1412. The second vibration damping ring 1313 can be connected in an interference fit with the second mounting hole 1412.

If the second vibration damper 1311 also presses against the other one of the housing 141 and the to-be-mounted member 200, it may be indicated that at least one second vibration damping end plate 1314 in the second vibration damper 1311 also presses against the other one of the housing 141 and the to-be-mounted member 200. In this embodiment of this application, the second vibration damper 1311 is connected to the housing 141, and at least one second vibration damping end plate 1314 in the second vibration damper 1311 also presses against the to-be-mounted member 200.

Further, the second vibration damping unit 131 further includes a second rigid member 1316, the second rigid member 1316 is located in the second vibration damping ring 1313, and the second locking member 1312 connects the second rigid member 1316 to the other one of the housing 141 and the to-be-mounted member 200. The second locking member 1312 is connected to the second rigid member 1316, and the second rigid member 1316 is made of a rigid material. Compared with an elastic member made of the elastic material, for example the second vibration damping ring 1313 or the second vibration damping end plate 1314 connected to the second locking member 1312, the second rigid member is not twisted and deformed during a connection process, is easier to connect and can have a restraint effect. In addition, the second locking member 1312 is connected to the second rigid member 1316, which can protect the elastic member such as the second vibration damping ring 1313 or the second vibration damping end plate 1314 in a process of connecting the second locking member 1312 to the second rigid member 1316, thereby avoiding damaging the elastic member such as the second vibration damping ring 1313 or the second vibration damping end plate 1314 when the second locking member 1312 is connected to the elastic member such as the second vibration damping ring 1313 or the second vibration damping end plate 1314.

Referring to FIG. 22, the second rigid member 1316 and the other one of the housing 141 and the to-be-mounted member 200 can form an integral structure. In this embodiment of this application, the second vibration damper 1311 is connected to the housing 141, and the second rigid member 1316 and the to-be-mounted member 200 form an integral structure. Alternatively, referring to FIG. 23, the second rigid member 1316 and the second vibration damping ring 1313 can form an integral structure.

Further, the second rigid member 1316 may have a connection hole extending in an axial direction of the second vibration damping ring 1313, and the second locking member 1312 may be connected to the connection hole of the second rigid member 1316. In this way, the arrangement of the second rigid member 1316 also helps to ensure rigidity design accuracy of the second vibration damping unit 131 in the axial direction of the second vibration damping ring 1313. The second locking member 1312 and the connection hole may be threadedly connected, which is not limited.

Specifically, the second locking member 1312 may include a screw or the like, an end cap of the screw may abut against a side of the second vibration damper 1311 that faces away from the to-be-mounted member 200, and a rod of the screw may be threadedly connected to the second rigid member 1316 and the to-be-mounted member 200.

In this embodiment of this application, the second vibration damping unit 131 is connected to the housing 141. Referring to FIG. 22, the second vibration damping unit 131 can be directly connected to the housing 141. Referring to FIG. 24, the second vibration damping unit 131 and the housing 141 may also be connected indirectly. For example, the second vibration damping unit 131 is connected to the housing 141 via a second mounting plate 1415 on the housing 141, which is not limited.

Further, the second mounting plate 1415 and the housing 141 can form an integral structure, and the second mounting plate 1415 and the second vibration damping unit 131 can also form an integral structure, which is not limited. If the second mounting plate 1415 and the second vibration damping unit 131 form an integral structure, the second mounting plate 1415 and the second vibration damping unit 131 can form the integral structure through processes such as bi-color injection molding and integral compression molding.

It should be noted that the second mounting plate 1415 can also be detachably connected to the housing 141, to improve flatness of an external surface of the LiDAR 100, thereby facilitating transportation and the like. If the second mounting plate 1415 is detachably connected to the housing 141, the second vibration damping structure 1300 mounted on the second mounting plate 1415 and the housing 141 may also be detachably connected, which is not limited. For example, the second mounting plate 1415 and the second vibration damping structure 1300 can be mounted on the to-be-mounted member 200, and then the housing 141 of the LiDAR 100 is connected to the second mounting plate 1415 and the second vibration damping structure 1300 on the to-be-mounted member 200.

Referring to FIG. 23 again, the to-be-mounted member 200 can also be provided with a second bulge 210 at the second vibration damping unit 131, and when the second locking member 1312 of the second vibration damping unit 131 is connected to the to-be-mounted member 200, it may be indicated that the second locking member 1312 is connected to the second bulge 210. On the one hand, arrangement of the second bulge 210 facilitates mounting and positioning of the housing module 140 at the to-be-mounted member 200, and on the other hand, compared with the direct connection between the second locking member 1312 and the to-be-mounted member 200, the second locking member 1312 is connected to the second bulge 210, so that a distance between the two connected structures can be shortened and connection is more convenient.

The second vibration damping structure 1300 can include any number of second vibration damping units 131; and optionally, the number of second vibration damping units 131 included in the second vibration damping structure 1300 is more than three. For example, the number of second vibration damping units 131 included in the second vibration damping structure 1300 can be three, four, five, or the like. When the excitation frequency is great, if the number of second vibration damping units 131 is great and the to-be-mounted member 200 deforms, some second vibration damping units 131 may be dislocated, the housing module 140 or the second vibration damping unit 131 is consequently damaged due to excessive force, and therefore, the number of second vibration damping units 131 included in the second vibration damping structure 1300 is preferably three or four. The three second vibration damping units 131 and the housing module 140 have good compliance, and because three points determine a plane, the three vibration damping units are less likely to be affected by deformation of the to-be-mounted member 200, the inherent frequency of the system of the housing module 140 can be low, and an effect of resisting torsional vibration is good. Four second vibration damping units 131 implement good stability and can overcome large torque counterforce. Therefore, during actual manufacturing, the three second vibration damping units 131 or four second vibration damping units 131 can be selected based on a specific situation.

The second vibration damping structure 1300 is described in detail below by taking the second vibration damping structure 1300 including four second vibration damping units 131 as an example:

Referring to FIG. 24, a peripheral side wall of the housing module 140 includes multiple side walls that are perpendicular to the horizontal plane and that are connected in sequence. Specifically, the peripheral side wall includes a first side wall 1413 and a second side wall 1414 that are opposite and parallel to each other, and the four second vibration damping units 131 of the second vibration damping structure 1300 can be respectively denoted as a second vibration damping unit 131e, a second vibration damping unit 131f, a second vibration damping unit 131g, and a second vibration damping unit 131h. The second vibration damping unit 131e and the second vibration damping unit 131f are both connected to the first side wall 1413 of the housing module 140, and the second vibration damping unit 131g and the second vibration damping unit 131h are both connected to the second side wall 1414 of the housing module 140. The second vibration damping unit 131e and the second vibration damping unit 131f are symmetrical with respect to a first plane, the second vibration damping unit 131g and the second vibration damping unit 131h are symmetrical with respect to the first plane, the second vibration damping unit 131e and the second vibration damping unit 131g are symmetrical with respect to a second plane, and the second vibration damping unit 131f and the second vibration damping unit 131h are symmetrical with respect to the second plane. The first plane is a vertical plane that passes through the barycenter z of the housing module 140 and that is perpendicular to the first side wall 1413, and the second plane is a vertical plane that passes through a geometric center d of gravity of the second vibration damping structure 120 and that is parallel to the first side wall 1413. The arrangement positions of the four second vibration damping units 131 and the housing module 140 are properly designed, which lowers difficulty in subsequently designing decoupling in each degree-of-freedom direction.

Optionally, support centers of the second vibration damping unit 131e, the second vibration damping unit 131f, the second vibration damping unit 131g, and the second vibration damping unit 131h are located in the same horizontal plane as the barycenter z of the housing module 140, so that a support center x of the second vibration damping structure 1300 and the barycenter c of the housing module 140 are located in the same horizontal plane.

Optionally, the peripheral side wall of the housing module 140 includes four side walls, and each two adjacent side walls are perpendicular to each other.

Optionally, along the same degree-of-freedom direction, a ratio of rigidity of the second vibration damping unit 131e to rigidity of the second vibration damping unit 131g is a first ratio, a ratio of rigidity of the second vibration damping unit 131f to rigidity of the second vibration damping unit 131h is a second ratio, and the first ratio is equal to the second ratio. For example, along the first linear degree-of-freedom direction, rigidity of the second vibration damping unit 131e is p1, and rigidity of the second vibration damping unit 131g is p3; along the first linear degree-of-freedom direction, rigidity of the second vibration damping unit 131f is p2, and rigidity of the second vibration damping unit 131h is p4; and therefore, along the first linear degree-of-freedom direction, a ratio p1/p3 of the rigidity p1 of the second vibration damping unit 131e to the rigidity p3 of the second vibration damping unit 131g is equal to a ratio p2/p4 of the rigidity p2 of the second vibration damping unit 131f to the rigidity p4 of the second vibration damping unit 131h. For another example, along the second linear degree-of-freedom direction, rigidity of the second vibration damping unit 131e is q1, and rigidity of the second vibration damping unit 131g is q3; along the second linear degree-of-freedom direction, rigidity of the second vibration damping unit 131f is q2, and rigidity of the second vibration damping unit 131h is q4; and therefore, along the second linear degree-of-freedom direction, a ratio q1/q3 of the rigidity q1 of the second vibration damping unit 131e to the rigidity q3 of the second vibration damping unit 131g is equal to a ratio q2/q4 of the rigidity q2 of the second vibration damping unit 131f to the rigidity q4 of the second vibration damping unit 131h.

Optionally, along the same degree-of-freedom direction, the rigidity of the second vibration damping unit 131e is equal to the rigidity of the second vibration damping unit 131f, and the rigidity of the second vibration damping unit 131g is equal to the rigidity of the second vibration damping unit 131h, so that vibration of the housing module 140 in six degree-of-freedom directions is decoupled. For example, along the first linear degree-of-freedom direction, the rigidity p1 of the second vibration damping unit 131e is equal to the rigidity p3 of the second vibration damping unit 131g, and the rigidity p2 of the second vibration damping unit 131f is equal to the rigidity p4 of the second vibration damping unit 131h. For another example, along the second linear degree-of-freedom direction, the rigidity q1 of the second vibration damping unit 131e is equal to the rigidity q3 of the second vibration damping unit 131g, and the rigidity q2 of the second vibration damping unit 131f is equal to the rigidity q4 of the second vibration damping unit 131h.

Rigidity of the second vibration damping unit 131 affects the inherent frequency of the system of the housing module 140; and along each degree-of-freedom direction, the rigidity of the second vibration damping unit 131e is designed to be equal to the rigidity of the second vibration damping unit 131f, and the rigidity of the second vibration damping unit 131g is designed to be equal to the rigidity of the second vibration damping unit 131h, which lowers difficulty in designing the second vibration damping structure 1300 and reduces design costs.

It should be noted that the geometric center of gravity of the second vibration damping structure 1300 may or may not overlap with the barycenter z of the housing module 140. Specifically, as described above, if the second vibration damping units 131 are distributed into a regular shape, along the same degree-of-freedom direction, a ratio of rigidity of the second vibration damping unit 131e to rigidity of the second vibration damping unit 131g is a first ratio, a ratio of rigidity of the second vibration damping unit 131f to rigidity of the second vibration damping unit 131h is a second ratio, and the first ratio is equal to the second ratio. At this time, the geometric center of gravity of the second vibration damping structure 1300 overlaps with the elastic center y of the second vibration damping structure 1300, the elastic center y of the second vibration damping structure 1300 overlaps with the barycenter z of the housing module 140, and therefore, the geometric center of gravity of the second vibration damping structure 1300 can overlap with the barycenter z of the housing module 140.

If the second vibration damping units 131 are distributed into an irregular shape, the second vibration damping units 131 can be designed to have the same rigidity. In addition, when the second vibration damping units 131 have the same rigidity, the elastic center y of the second vibration damping structure 1300 can be a center of gravity of a geometric shape formed by connecting lines of the second vibration damping units 131, and the geometric center of gravity of the second vibration damping structure 1300 overlaps with the elastic center y of the second vibration damping structure 1300, so that the geometric center of gravity of the second vibration damping structure 1300 overlaps with the barycenter z of the housing module 140, which lowers design difficulty.

It should be noted that the geometric center of gravity of the second vibration damping structure 1300 is different from a geometric center of the second vibration damping structure 1300. If the second vibration damping units 131 are distributed into the regular shape (for example, an equilateral triangle or a square), the geometric center of gravity of the second vibration damping structure 1300 overlaps with the geometric center of the second vibration damping structure 1300. If the second vibration damping units 131 are distributed into an irregular shape, the geometric center of gravity of the second vibration damping structure 1300 no longer overlaps with the geometric center of the second vibration damping structure 1300. Specifically, if the second vibration damping structure 1300 includes three second vibration damping units 131, the geometric center of gravity of the second vibration damping structure 1300 may be an intersection point of three centers of triangles formed by lines connecting the three second vibration damping units 131.

Optionally, the second vibration damping units 131 in the second vibration damping structure 1300 may be approximately the same. For example, the second vibration damping units 131 in the second vibration damping structure 1300 may use the same structure, manufacturing material, and the like.

It should be noted that arrangement and rigidity designs of each second vibration damping unit 131 of the second vibration damping structure 1300 are described in detail above, and arrangement and rigidity designs of each first vibration damping unit 1210 of the first vibration damping structure 1200 are approximately similar to the foregoing arrangement and rigidity designs of the second vibration damping units 131. Details are not described herein again.

It should be noted that because it is difficult to design the core module 110 into the regular shape in most cases, it is difficult to design the first vibration damping units 1210 connected to the core module 110 into a regular distribution shape in most cases. Therefore, the first vibration damping units 1210 can be designed to have approximately the same rigidity, so that the elastic center b of the first vibration damping structure 1200 is the center of gravity of the geometric shape formed by the connecting lines of the first vibration damping units 1210, the geometric center of gravity of the first vibration damping structure 1200 overlaps with the elastic center y of the first vibration damping structure 1200, and the geometric center of gravity of the first vibration damping structure 1200 overlaps with the barycenter z of the core module 110, which lowers the design difficulty.

Optionally, the first vibration damping units 1210 in the first vibration damping structure 1200 may be approximately the same. For example, the first vibration damping units 1210 in the first vibration damping structure 1200 may use the same structure, manufacturing material, and the like.

The LiDAR 100 in this embodiment of this application damps vibration of the core module 110 including the optical system 111 and the scanning system 112, without affecting internal parameters of optical devices due to introduction of the vibration damping process. In addition, an arrangement position and rigidity of each first vibration damping unit 1210 are designed based on a barycenter position, a mass and an inertia parameter of the core module 110 subject to vibration isolation, and an arrangement position and rigidity of each second vibration damping unit 131 are designed based on a barycenter position, a mass and an inertia parameter of the housing module 140 subject to vibration isolation, which can ensure that excitation generated by an internal movable component of the LiDAR 100 is better attenuated and excessive relative displacement is not caused due to the introduction of the first vibration damping structure 1200 and the second vibration damping structure 1300.

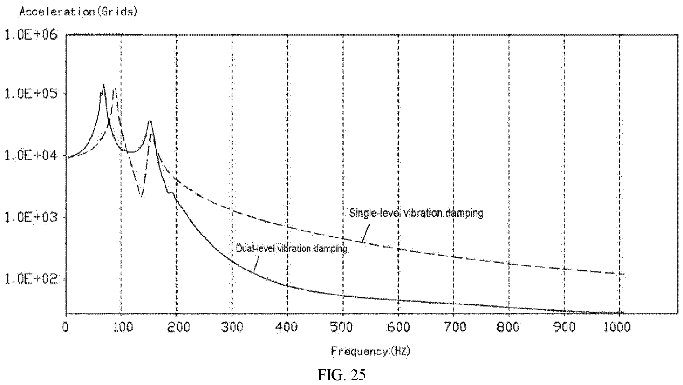

Referring to FIG. 25, FIG. 25 is a schematic diagram of a transmissibility curve of LiDAR 100 provided with a dual-level vibration damping structure of a first vibration damping structure 1200 and a second vibration damping structure 1300 in this embodiment of this application, and LiDAR 100 provided with only a single-level vibration damping structure in a certain degree-of-freedom direction. Referring to FIG. 14, it can be seen that an attenuation rate of transmissibility of the dual-level vibration damping structure in this embodiment of this application under high-frequency excitation is roughly proportional to fourth power of frequency, an attenuation rate of transmissibility of the single-level vibration damping structure under high-frequency excitation is roughly proportional to second power of frequency, and a high-frequency vibration isolation effect of the dual-level vibration damping structure is far better than a high-frequency vibration isolation effect of the single-level vibration damping, with both vibration and noise significantly alleviated.

In this embodiment of this application, the first vibration damping structure 1200 can be designed to attenuate about 90% of vibration generated by the drive motor of the scanning system 112 in the core module 110, so that response acceleration transmitted from the core module 110 to the housing module 140 is 0.1 times that of an excitation terminal. The second vibration damping structure 1300 can be designed to additionally attenuate about 90% of vibration generated by the entire LiDAR 100, so that response acceleration transmitted from the LiDAR 100 to the to-be-mounted member 200 is 0.01 times that of the excitation terminal. Similarly, when the LiDAR 100 is excited by the ambience, after passing through the first vibration damping structure 1200 and the second vibration damping structure 1300, response acceleration transmitted to the core module 110 may be 0.01 times that of the exciting terminal.

According to another aspect, an embodiment of this application provides a mobile device or vehicle 10, including the foregoing LiDAR 100 and a to-be-mounted member 200, where the to-be-mounted member 200 may be a vehicle or the like, which is not limited.

In the description of the present application, it shall be understood that the terms such as "first" and "second" are merely intended for a purpose of description, and shall not be understood as an indication or implication of relative importance. The person skilled in the art can understand specific meanings of the foregoing terms in the present application to a specific situation. In addition, in the descriptions of this application, "a plurality of" means two or more unless otherwise specified. Herein, "and/or" is an association relationship for describing associated objects and indicates that three relationships may exist. For example, A and/or B may mean the following three cases: Only A exists, both A and B exist, and only B exists. The character "/" generally indicates an "or" relationship between the associated objects.

The disclosed forgoing are only preferred embodiments of the present application, which of course cannot be used to limit the scope of rights of the present application. Therefore, equivalent changes made in accordance with the claims of the present application still fall within the scope of the application.

## Claims

1. A LiDAR device, comprising:

    a main body, comprising an optical system, a scanning system and a fixing base, wherein the optical system comprises a light emission assembly and a light receiving assembly, the light emission assembly is configured to emit an emission light signal, the scanning system is on a light emission path of the emission light signal and is configured to transmit the emission light signal to an object, the scanning system is further on a transmission path of an echo light signal returned by the object and is configured to transmit the echo light signal to the light receiving assembly, and both the optical system and the scanning system are mounted on the fixing base; and
    a vibration damping structure, comprising multiple elastic vibration damping units, wherein each vibration damping unit is connected to the fixing base, and is configured to mount the fixing base onto a to-be-mounted member to mount the main body onto the to-be-mounted member, and an elastic center of the vibration damping structure overlaps with a barycenter of the main body.

2. The LiDAR device according to claim 1, wherein the vibration damping structure is configured to damp vibration of the main body in at least two degree-of-freedom directions.

3. The LiDAR device according to claim 2, wherein the vibration damping unit comprises a vibration damper, the vibration damper comprising:

    a vibration damping ring, connected to the main body; and
    two vibration damping end plates, respectively located on two opposite sides of the vibration damping ring along an axial direction of the vibration damping ring, wherein each vibration damping end plate has a terminal connected to the vibration damping ring and another terminal extending in a direction that is away from the vibration damping ring and is perpendicular to the axial direction of the vibration damping ring, and a side of at least one vibration damping end plate that faces away from the vibration damping ring is configured to press against the to-be-mounted member.

4. The LiDAR device according to claim 3, wherein a first mounting hole is formed in the fixing base, the vibration damping ring is located on the first mounting hole, and the two vibration damping end plates are respectively located on two opposite sides of the first mounting hole.

5. The LiDAR device according to claim 3, wherein the vibration damping unit further comprises a mounting plate, the mounting plate is connected to the fixing base, a second mounting hole is formed on the mounting plate, the vibration damping ring is located in the second mounting hole, and the two vibration damping end plates are respectively located on two opposite sides of the second mounting hole.

6. The LiDAR device according to claim 5, wherein the mounting plate and the vibration damper of at least one vibration damping unit form an integrated structure.

7. The LiDAR device according to claim 3, further comprising:
    multiple locking members, wherein the multiple locking members are disposed in one-to-one correspondence with multiple vibration damping units, and each locking member is configured to pass through the vibration damping ring of the vibration damping unit to connect the vibration damping unit with the to-be-mounted member.

8. The LiDAR device according to claim 2, wherein the main body is configured to be mounted on the to-be-mounted member along a first linear degree-of-freedom direction, and the vibration damping structure satisfies: vibration damping performance along the first linear degree-of-freedom direction is better than vibration damping performance along another degree-of-freedom direction.

9. The LiDAR device according to claim 1, wherein a peripheral side wall of the main body comprises a first side wall and a second side wall that are perpendicular to a horizontal plane, and the first side wall is arranged opposite and parallel to the second side wall;

the vibration damping structure comprises four vibration damping units, namely a first vibration damping unit, a second vibration damping unit, a third vibration damping unit and a fourth vibration damping unit, the first vibration damping unit and the second vibration damping unit are both connected to the first side wall, and the third vibration damping unit and the fourth vibration damping unit are both connected to the second side wall; and
the first vibration damping unit and the second vibration damping unit are symmetrical with respect to a first plane, the third vibration damping unit and the fourth vibration damping unit are symmetrical with respect to the first plane, the first vibration damping unit and the third vibration damping unit are symmetrical with respect to a second plane, the second vibration damping unit and the fourth vibration damping unit are symmetrical with respect to the second plane, the first plane is a vertical plane that passes through the barycenter of the main body and is perpendicular to the first side wall, and the second plane is a vertical plane that passes through a geometric center of the main body and is parallel to the first side wall.

10. The LiDAR device according to claim 9, wherein along a same degree-of-freedom direction, a ratio of rigidity of the first vibration damping unit to rigidity of the third vibration damping unit is a first ratio, a ratio of rigidity of the second vibration damping unit to rigidity of the fourth vibration damping unit is a second ratio, and the first ratio is equal to the second ratio.

11. A LiDAR device, comprising:

a housing module;
a core module, wherein the core module comprises an optical system, a scanning system and a fixing base, the optical system comprises a light emission assembly and a light receiving assembly, the light emission assembly is configured to emit detection light to a target object in a target region, the light receiving assembly is configured to receive echo light returned after the detection light is reflected by the target object, the scanning system is located downstream of the light emission assembly along a transmission direction of the detection light, the scanning system is located upstream of the light receiving assembly along a transmission direction of the echo light, and both the optical system and the scanning system are mounted onto the fixing base;
a first vibration damping structure, wherein the first vibration damping structure is connected to the housing module and the fixing base, and an elastic center of the first vibration damping structure overlaps with a barycenter of the core module; and
a second vibration damping structure, wherein the second vibration damping structure is connected to the housing module, the second vibration damping structure is configured to be connected to a to-be-mounted member to mount the LiDAR device onto the to-be-mounted member, and an elastic center of the second vibration damping structure overlaps with a barycenter of the housing module.

12. The LiDAR device according to claim 11, wherein the elastic center of the first vibration damping structure and the elastic center of the second vibration damping structure are on a first straight line, and the first straight line is perpendicular to a mounting surface of the to-be-mounted member on which the LiDAR device is mounted.

13. The LiDAR device according to claim 11, wherein the elastic center of the first vibration damping structure overlaps with the elastic center of the second vibration damping structure.

14. The LiDAR device according to claim 11, wherein the first vibration damping structure comprises multiple first vibration damping units, and each first vibration damping unit comprises:

a first vibration damper, wherein the first vibration damper is connected to one of the fixing base and the housing module; and
a first locking member, wherein the first locking member is connected to the first vibration damper and the other one of the fixing base and the housing module, wherein
the first vibration damper is configured to press against the other one of the fixing base and the housing module, or the first vibration damper is spaced apart from the other one of the fixing base and the housing module.

15. The LiDAR device according to claim 14, wherein the first vibration damper comprises:

a first vibration damping ring; and

two first vibration damping end plates, wherein the two first vibration damping end plates are respectively located on two opposite sides of the first vibration damping ring along an axial direction of the first vibration damping ring, each first vibration damping end plate has a terminal connected to the first vibration damping ring and another terminal extending in a direction that is away from the first vibration damping ring and is perpendicular to the axial direction of the first vibration damping ring, and a first mounting section is defined between the two first vibration damping end plates and the first vibration damping ring, and one of the fixing base and the housing module is mounted in the first mounting section.

FIG. 1

FIG. 2

FIG. 3

FIG. 4

FIG. 5

FIG. 6

EP 4 332 618 A1

FIG. 7

FIG. 8

FIG. 9

27

FIG. 10

FIG. 11

FIG. 12

Provide a main body, where the main body includes an optical system, a scanning system and a fixing base, the optical system includes a light emission assembly and a light receiving assembly, the light emission assembly is configured to emit an emission light signal, the scanning system is on a light emission path of the emission light signal and is used to transmit the emission light signal to an irradiated subject, the scanning system is also on a transmission path of an echo light signal returned by the irradiated subject and is used to transmit the echo light signal to the light receiving assembly, and both the optical system and the scanning system are mounted on the fixing base

~ S02

Provide a vibration damping structure, where the vibration damping structure includes multiple elastic vibration damping units

~ S04

Connect each vibration damping unit to the fixing base, so that an elastic center of the vibration damping structure overlaps with a barycenter of the main body

~ S06

FIG. 13

FIG. 14

FIG. 15

FIG. 16

Echo light    Detection light

FIG. 17

FIG. 18

FIG. 19

FIG. 20

1210  12120

1214 0  1213 0

12150  12110  1131

113

1216 0

1411

141

FIG. 21

131  1312

1314  1313  1311

1315  1412

141

1314  1316  200

FIG. 22

34

FIG. 23

FIG. 24

FIG. 25

Europäisches
Patentamt

European
Patent Office

Office européen
des brevets

# EUROPEAN SEARCH REPORT

Application Number

EP 23 19 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 000987 A1 (RIEGL LASER MEASUREMENT SYS [AT]) 31 July 2014 (2014-07-31) | 1,2,8, 11,13 | INV. G01S7/481 |
| Y | * paragraphs [0112] – [0116], [0016] – [0018], [0020], [0022], [0023], [0025]; figures 1-4 * | 3-7,9, 10,12, 14,15 | |
| Y | EP 3 855 210 A1 (SICK AG [DE]) 28 July 2021 (2021-07-28) * paragraph [0025]; figures 1-2 * | 3,5-7,9, 10,14,15 | |
| Y | US 6 688 174 B1 (GALLON PIERRE [FR] ET AL) 10 February 2004 (2004-02-10) * col. 5, lines 31-52; paragraphs [0112] – [0116], [0025]; figures 2-3 * | 3,5-7,9, 10,14,15 | |
| Y | US 2021/215803 A1 (ZHOU LIKUI [CN] ET AL) 15 July 2021 (2021-07-15) * paragraphs [0112] – [0116], [0025], [0037]; figure 15 * | 3-7,9, 10,12, 14,15 | |

| | | | TECHNICAL FIELDS SEARCHED (IPC) |
|---|---|---|---|
| | | | G01S |

The present search report has been drawn up for all claims

| Place of search | Date of completion of the search | Examiner |
|---|---|---|
| Munich | 9 January 2024 | Metz, Carsten |

EPO FORM 1503 03.82 (P04C01)

## ANNEX TO THE EUROPEAN SEARCH REPORT
## ON EUROPEAN PATENT APPLICATION NO.

EP 23 19 1894

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2024

| Patent document cited in search report | Publication date | Patent family member(s) | Publication date |
|---|---|---|---|
| DE 102014000987 A1 | 31-07-2014 | AT 513950 A1 | 15-08-2014 |
| | | CH 707495 A2 | 31-07-2014 |
| | | DE 102014000987 A1 | 31-07-2014 |
| EP 3855210 A1 | 28-07-2021 | DE 102020101272 A1 | 22-07-2021 |
| | | EP 3855210 A1 | 28-07-2021 |
| US 6688174 B1 | 10-02-2004 | DE 69923955 T2 | 23-02-2006 |
| | | EP 1058818 A1 | 13-12-2000 |
| | | FR 2787878 A1 | 30-06-2000 |
| | | US 6688174 B1 | 10-02-2004 |
| | | WO 0039526 A1 | 06-07-2000 |
| US 2021215803 A1 | 15-07-2021 | CN 111328376 A | 23-06-2020 |
| | | US 2021215803 A1 | 15-07-2021 |
| | | WO 2020062110 A1 | 02-04-2020 |

EPO FORM P0459

For more details about this annex : see Official Journal of the European Patent Office, No. 12/82